(19) Europäisches Patentamt
European Patent Office
Office européen des brevets

(11) Publication number: 0 135 659
B1

(12) **EUROPEAN PATENT SPECIFICATION**

(45) Date of publication of patent specification: **26.07.89**

(51) Int. Cl.$^4$: **C 08 L 77/00**, C 08 K 5/13, C 08 K 5/20, A 61 L 2/08

(21) Application number: **84104482.9**

(22) Date of filing: **19.04.84**

# (54) Irradiation of a polyamide composition.

(30) Priority: **31.05.83 US 499744**

(43) Date of publication of application:
**03.04.85 Bulletin 85/14**

(45) Publication of the grant of the patent:
**26.07.89 Bulletin 89/30**

(84) Designated Contracting States:
**DE FR GB IT**

(56) References cited:
**DE-A-2 309 435**
**FR-A-2 116 574**
**FR-A-2 272 137**

**CHEMICAL ABSTRACTS, vol. 84, no. 22, 31st May 1976, page 330, no. 169639k, Columbus, Ohio, USA; A.M. ROBALEWSKI et al.: "Application of polyamides and polyterephthalic acid esters to the manufacture of medical articles sterilized by accelerated electrons" & POLIM. MED. 1975, 5(4), 349-360**

(73) Proprietor: **ALLIED-SIGNAL INC. (a Delaware corporation)**
**Columbia Road and Park Avenue P.O. Box 2245R**
**Morristown New Jersey 07960 (US)**

(72) Inventor: **Sibilia, John P.**
**12 Balmoral Drive**
**Livingston New Jersey 07039 (US)**
Inventor: **Stewart, Donald F.**
**28 Groce Place**
**Whippany New Jersey 07981 (US)**
Inventor: **Huthwaite, Herbert J.**
**4 Sutton Place**
**Florham Park New Jersey 07932 (US)**

(74) Representative: **Brock, Peter William**
**Urquhart-Dykes & Lord 91 Wimpole Street**
**GB-London W1M 8AH (GB)**

(56) References cited:
**CHEMICAL ABSTRACTS, vol. 75, no. 1, 5th July 1971, page 596, no. 29023u, Columbus, Ohio, USA; L. BOD et al.: "Nuclear reactor as a source of gamma radiation" & ENERG. ATOMTECH. 1971, 24(2), 100-104**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 135 659 B1

Courier Press, Leamington Spa, England.

(56) References cited:
CHEMICAL ABSTRACTS, vol. 77, no. 22, 27th November 1972, page 19, no. 140770r, Columbus, Ohio, USA; J.J. KILLORAN: "Chemical and physical changes in food packaging" & RADIAT. RES. REV. 1972, 3(4), 369-388

"Biocompatible polymers, metals, and composites", edited by M. Szycher, 1983, pages 975-999, Technomic Publishing Co. Inc., Pennsylvania, USA;

## Description

This invention relates to irradiation of a polyamide composition; more particularly this invention relates to irradiating a polyamide composition which contains a hindered phenol compound.

The treatment of polymeric materials with radiation has been reviewed by Zimmerman, J., "In the Radiation Chemistry of Macromolecules" by Malcolm Dole, Academic Press, N.Y. 1973.

Abramova et al., "Radiolysis and Radiation-induced Oxidations of Polycaproamide in the Presence of Some Antioxidants", European Polymer Journal-Supplement, 1969, pp. 511—515, Pergamon Press, England, reviews the stabilizing effect of secondary aromatic amines and substituted phenols on the radiolysis and radiation-induced oxidation of polyepsiloncaproamide. Of particular interest in this study was the use of a hindered or substituted phenol, 2,2'-methylene-bis-4-methyl-6-tert-butyl phenol. This was included in a group of antioxidants used to prevent thermal oxidation of polyamides. The study was conducted using films of polyepsiloncaproamide which were 2 to 6 micrometers thick. The stabilizing action of the hindered phenol, 2,2'-methylene-bis-4-methyl-6-tert-butyl phenol was found to be less than a variety of other materials tried and the stabilizing action only at the limit of the accuracy of measurement.

Presently medical devices, such as syringes, are sterilized using ethylene oxide. However, ethylene oxide is a suspected carcinogen, and it has been projected that its use will be phased out in the next several years. Sterilization of various devices is expected to be conducted by the use of high energy radiation. Devices to be sterilized include devices made at least in part of polyamides. It is also contemplated that articles to be sterilized will be packaged in packages made at least in part of polyamides.

FR—A—2116574 identifies various stabilizers including hindered phenols useful to the stabilize polyamide against light induced degradation.

### Summary of the Invention

The present invention provides a method of producing a composition comprising the steps:

a) providing a composition comprising a polyamide and from 0.01 to 10 percent based on the weight of the polyamide of a hindered phenol having the formula:

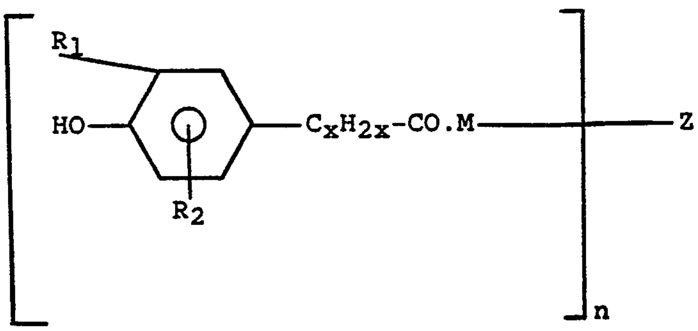

n = 2 to 6;

x = 2 to 6;

$R_1$ is methyl, ethyl, or an alpha-branched alkyl group of from 3 to 10 carbon atoms, each $R_1$ being the same or different;

$R_2$ is hydrogen, methyl, ethyl or an alpha-branched alkyl group of from 3 to 10 carbon atoms, each $R_2$ being the same or different,

M is —NH— or —O—, and

Z is an alkylene or arylene group or an alkylene group interrupted by a cyanurate group or by amine, oxygen, sulphur, or phosphorus.

and

b) irradiating said composition with ionising radiation.

Two preferred hindered phenols are:

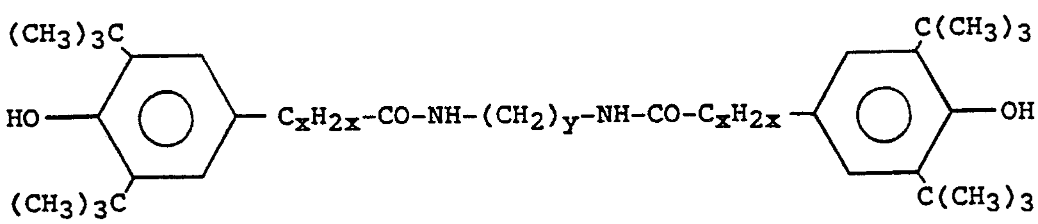

wherein x is 2 to 6 and y is 2 to 10;

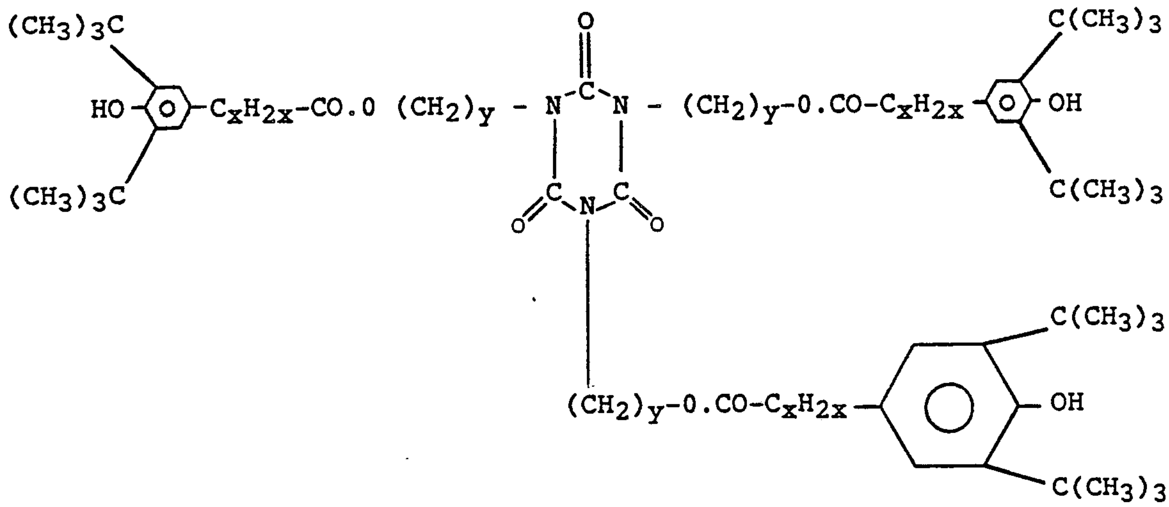

wherein x is 2 to 6 and y is 2 to 10.

The method of the present invention is particularly useful in sterilizing the polyamide composition and/or articles made of the polyamide composition and in particular film.

The term "polyamide" used in the present invention is intended to include long chain synthetic polymers which have regularly recurring amide groups as an integral part of the main polymer chain, and hence, includes amide-ester copolymers. Suitable polyamides can be prepared by polymerization of a difunctional monomer or equivalently, its cyclized lactam (e.g., epsilon-aminocaproic acid or caprolactam, respectively) or by the reaction of a conjugate pair of monomers, for example, a diamide and a dicarboxylic acid (e.g., hexamethylenediamine and adipic acid), or a linear amino-aliphatic acid such as 11-amino undecanoic acid. Suitable polylactams can be produced by the polymerization of lactam monomers of the formula

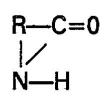

where R is an alkylene group having from 3 to 12 or more carbon atoms, preferably from 5 to 12 carbon atoms. A preferred monomer is epsiloncaprolactam having 5 carbon atoms in the alkylene group. Lactam monomers in addition to epsiloncaprolactam include pyrollidone, piperdone, valerolactam, caprolactam, laurylIactam, etc. Also included are copolymers of two or more of the above or similar lactam monomers. Suitable diamines useful in the polymerization of polyamides include propanediamine, hexamethylenediamine, octamethylenediamine, etc. Suitable polycarboxylic acids include acids such as adipic acid, pimelic, suberic, sebacic, dodecanonic, etc. Also included are copolymers or blends of polyamides of the above two categories.

Polyamides useful in the composition of the present invention preferably are polyepsiloncaprolactam, polyhexamethyleneadipamide, or mixtures thereof. Typically, the number average molecular weight of these polymers is between about 10,000 and about 50,000, preferably 15,000 to 40,000, and more preferably 20,000 to 30,000. This is because mechanical properties improve rapidly up to about 20,000 and processing starts becoming more difficult after 30,000.

Polyepsiloncaprolactam or polyhexamethylene-adipamide suitable for use herein can contain a variety of terminal functionality. Preferred terminal functionality is that containing:

(a) A carboxyl group attached to both ends of the polyamide chain;

(b) A carboxyl group attached to one end and an acetamide group attached to the other end of the polyamide chain;

(c) An amino group attached to both ends of the polyamide chain; and

(d) A carboxyl group attached to one end and an amino group attached to the other end of the polyamide chain.

In addition to the polyamides discussed above, polyamide copolymers are useful in the alloys of the present invention. For the purpose of the present invention polyamide copolymers include polymers having two or more different monomers. Useful copolymers include but are not limited to the copolymers of: epsilon-caprolactam, and hexamethylenediamine and adipic acid; epsilon-caprolactam and 11-amino undecanoic acid; epsilon-caprolactam and 12-amino dodecanonic acid; hexamethylenediamine and adipic acid, and 11-amino undecanoic acid; and hexamethylenediamine and adipic acid, and 12-amino

dodecanonic acid. Polyamide copolymers also include block copolymers such as copolymers containing useful polyamide blocks and polyether blocks.

Useful polyamides include amorphous polyamides. Included in the amorphous polyamide polymers are copolymers of caprolactam, terephthalic acid and bis(p-aminocyclohexyl)methane with terephthalic acid or isophthalic acid. Useful amorphous polyamide copolymers are those disclosed in U.S. Patent No. 4,398,012.

A preferred copolymer contains 90 mol percent caprolactam, 5 mole percent terephthalic acid and 5 mol percent bis(p-aminocyclohexyl) methane.

Typical amorphous polyamide copolymers include Amidel® transparent nylon sold by Union Carbide; clear nylon 6 sold by Dynamit Nobel Chemikalien; Transparent Polyamide 55™ with aliphatic, cycloaliphatic acid and aromatic basic components sold by Emser Industries; and Durethan™ transparent polyamide containing isophorone diamine and isophthalic acid.

The composition of the present invention includes the hindered phenol as described above. There can be from 0.01 to 10 percent, preferably 0.02 to 3 percent, and more preferably 0.1 to 0.5 of the hindered phenol. Useful hindered phenols which come within the above-noted formula are described in U.S. Patent No. 3,644,482 and U.S. Patent No. 3,285,855.

Two particularly preferred hindered phenols which are useful in the composition used in the method of the present invention include

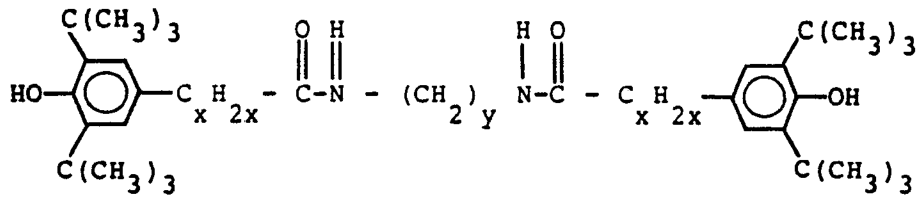

wherein x is 2 to 6 and y is 2 to 10, preferably used in the form of Irganox® 1098 which has the formula:

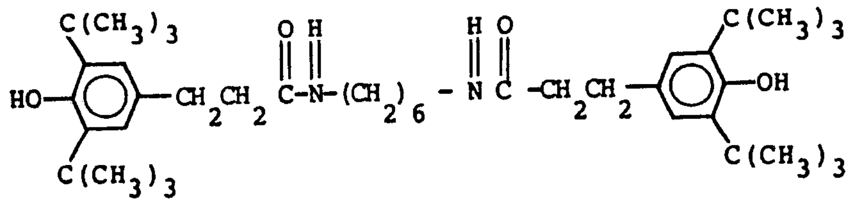

and

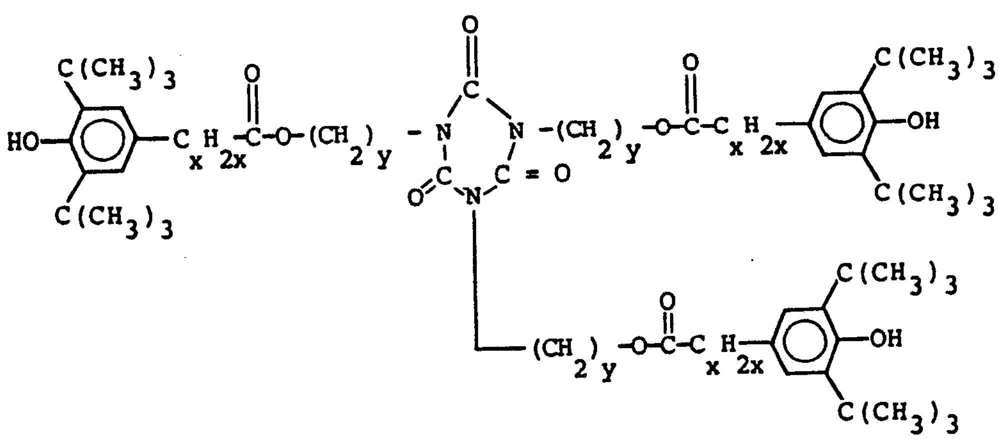

wherein x is 2 to 6 and y is 2 to 10, preferably used in the form of Goodright® 3125 which has the formula:

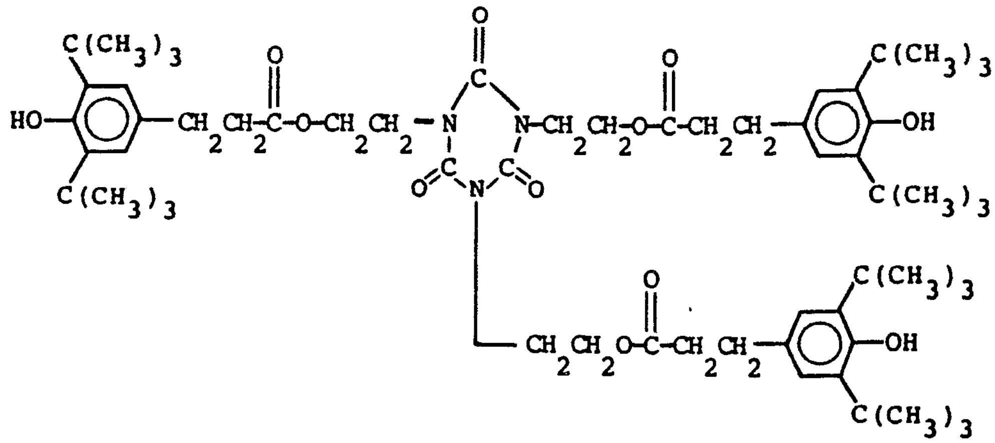

The composition of the present invention has been found to be able to be irradiated by ionizing radiation such as gamma radiation, electron beam radiation, and x-ray beams, and maintain its physical properties, including viscosity, tensile properties, and film toughness. The composition of the present invention can be irradiated prior to forming, or formed and subsequently irradiated. The composition of the present invention can be irradiated in any suitable form including extrusions, moldings, film, and film and sheet laminations. Examples of the irradiation of the composition of the present invention include incidental irradiation of polyamide packages containing articles to be irradiated. Typical of such packages are film packets containing medical related articles, such as syringes, to be sterilized by radiation. The composition of the present invention can be used to make molded articles such as medical equipment to be sterilized. Articles made of the composition can be used in environments where they are exposed to irradiation.

The compositon can be irradiated in an oxygen containing environment. However, it has been found that in the absence of oxygens the composition of the present invention maintains its properties to a greater degree than in the presence of oxygen. Properties which are particularly affected include the viscosity and toughness. The effects of oxygen can be observed by comparing film irradiated in sheet form where there is greater surface exposure to oxygen with film on a roll where the film in the innner wrappings of the roll is shielded from exposure to oxygen by the outer wrappings.

Film laminates including coextruded films containing at least one layer of the composition used in the present invention are preferred materials for use in packaging articles to be sterilized. A typical film laminate is a coextruded laminate having outer layers of ethylene vinyl acetate copolymer sandwiching an inner layer of the composition of the present invention. This is particularly useful since the outer layers act as a barrier to oxygen reaching the inner polyamide composition.

The radiation for use to irradiate the composition of the present invention is ionizing radiation such as gamma radiation, electron beam radiation, and x-radiation. The amount of radiation which the composition of the present invention can withstand depends on the configuration. In the form of a thin film, retention of properties is improved with doses of radiation up to 15 Megarads (Mrads), preferably 0.01 to 15 Mrads, more preferably 0.5 to 8 Mrads. Most preferably doses of 2 to 5 Mrads are used in sterilization operations. Such operations can be for as long as necessary to sterilize. Typical conditions are 0.5 Mrads per hour. Preferably, the amount of radiation dose which can be used is up to an amount which will enable the composition of the present invention to maintain greater than 50 percent of its elongation as measured on a film according to ASTM Test No. D882 or ASTM Test No. D638.

The radiation for use in sterilization processes is preferably gamma radiation by exposure to cobalt 60 ($Co^{60}$ gamma rays).

The exposure of polyamides to radiation results in the generation of free radicals on the carbon atom adjacent to the nitrogen atom as discussed in Zimmerman, *ibid.,* pp. 121—122. It is indicated that a variety of reaction sequences can subsequently occur. Reference is particularly made to Niman, M. B., Aging and Stabilization of Polymers, Consultants Bureau Enterprises, Inc., NY, 1965, p. 235; and Saunders, K. J., Organic Polymer Chemistry, Chapman and Hall, London, 1973, pp. 187—188. These references indicate that among the reactions which can occur in the absence of oxygen are chain cleavage and cross-linking. In the presence of oxygen a variety of cleavage reactions can occur. The presence of oxygen has been found to accelerate the cleavage reactions relative to the cross-linking reactions. The hindered phenols used in the method of the present invention are believed to intercept the peroxy radicals and reduce the cleavage reactions.

Several examples are set forth below to illustrate the nature of the invention and the manner of carrying it out. However, the invention should not be considered as being limited to the details thereof.

Irradiation experiments were conducted at Isomedix Corporation in Parsippany, New Jersey. Gamma radiation was used from a cobalt 60 ($Co^{60}$) source. Dosimeters were used by Isomedix to about ± .2 Mrad. Samples were rotated every .5 Mrad (about every hour of exposure) to reduce non-uniformities of irradiation. The doses given by Isomedix are the minimum doses for each nominal value. For example, doses of 1.5, 3.0 and 5.0 Mrads are minimum doses with the maximum dose as such as +10% of the nominal value.

The nylon used in the examples of the present invention was polyepsiloncaprolactam (Nylon 6). The nylon was irradiated in two different ways. The first or roll method was to irradiate the nylon while it was on the wind-up roll. Except for the very outer layers of the roll, this method resulted in irradiation under conditions of minimal exposure to oxygen. The second or sheet method of radiation was conducted on 8½" × 11" (21.59 cm × 27.94 cm) film sheets which had been cut from the roll. The films were placed between sheets of white paper, placed in envelopes (between 10 and 50 sheets to an envelope) and placed in a large cardboard box for irradiation. The irradiation of film in this manner resulted in a much higher degree of exposure to oxygen from the air surrounding each individual film.

The films were prepared from polypepsiloncaprolactam pellets which were mixed with an appropriate amount of stabilizer in powder form. The pellet and powder mixture was shaken to insure a fairly uniform coating of the pellets. The coated pellets were then extruded and cast to form films.

Examples 1—2

Nylon 6 compositions were made by first extruding the nylon pellets which had been physically blended with the powdered stabilizer through a 1½ inch (3.81 cm) Davis Standard Extruder with a barrel temperature of 500°F (260°C) to 510°F (265.6°C), a die temperature of 500°F (260°C) to 510°F (265.6°C), and a rate of 50 pounds (22.7 kg) per hour. The blend was then dried followed by reextrusion through a 2-inch (5.1 cm) single screw extruder with Zone 1 — 510°F (265.6°C), Zone 2 — 500°F (260°C) Zone 3 — 500°F (260.0°C), Zone 4 — 480°F (248.9°C). The extruded film was fed to a quench roll at 180°F (82.2°C) using a film die. The Nylon 6 has a formic acid viscosity of 75 and was sold as CAPRON® 8207F Nylon 6 produced by Allied Corporation. Comparative 1 was 100 percent Nylon 6. Example 1 was a blend of 99% by weight of Nylon 6 and 1% by weight of Irganox™ 1098 having the formula:

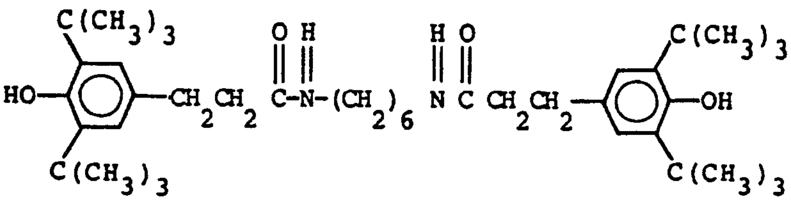

Example 2 was 99% of Nylon 6 plus 1% of Irganox 1010 having the formula:

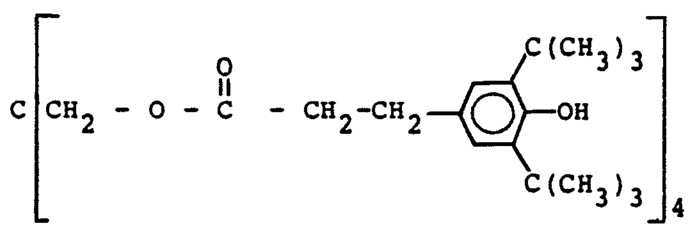

The compositions were formed into film which was 2.5 mills ($5\times10^{-2}$ mm) thick. The film was 12 inches (305 cm) wide and 300 to 400 feet (91.4 to 121.9 m) of film were formed into rolls. Each roll had an outer diameter of about 5 inches (12.7 cm) and was on a 3-inch (7.6 cm) cardboard tube. The rolls were irradiated at radiation levels of 0, 1.5, 3.0, and 4.5 Mrads as discussed above. The effect of radiation on the viscosity of the film is summarised in Table 1 below. The reduced viscosity was measured in m-cresol solution of the polymer at a concentration C of 0.52 g/dl at 25°C. The specific viscosity, $n_{np}$, was calculated from the relative flow times of sample solution and pure solvent minus one, i.e. $[(t\ sample/t_{solvent})—1]$.

TABLE 1

| | Comp 1 | Ex 1 | Ex 2 |
|---|---|---|---|
| Nylon (8207) wt% | 100 | 99 | 99 |
| Irganox 1098 | - | 1 | - |
| Irganox 1010 | - | - | 1 |
| Viscosity @ | | | |
| 0 Mrad | 1.83 | 1.84 | 1.85 |
| 1.5 | 1.71 | 1.71 | 1.73 |
| 3.0 | 1.59 | 1.56 | 1.56 |
| 4.5 | 1.58 | 1.57 | 1.56 |

The reduction and viscosity was not affected by the use of the stabilizer.

The effect on physical properties on the films was studied. The tests were conducted according to ASTM Test No. D638 at 23°C—50% relative humidity using Type IV test specimens. The Instron test head speed was 42 × $10^{-4}$ m/min. (1.0 in/min). All of the films were between 2.2 and 3.3 mils (5.6 × $10^{-2}$ and 8.4 × $10^{-2}$mm) thick. The results are summarized in Table 2 below.

YE is Yield Elongation, YS is Yield Strength, BE is Break Elongation, and BS is Break Strength. Properties were measured in the Machine Direction (MD) and in the Transverse Direction. (TD).

TABLE 2

| | Machine Direction | | | | |
|---|---|---|---|---|---|
| | % YE | PSI YS (KPa) | % BE (000) | PSI BS (000) (KPax$10^3$) | PSI MODULUS (KPa) |
| Comp 1 | | | | | |
| 0 Mrad | 13.2 | 4760 (32819) | 340 | 10 (68.9) | 163 (1124) |
| 1.5 | 13.2 | 4910 (33853) | 340 | 11 (75.8) | 157 (1082) |
| 3.0 | 13.6 | 5090 (35094) | 310 | 9 (62.1) | 183 (1262) |
| 4.5 | 11.0 | 5450 (37576) | 300 | 9 (62.1) | 186 (1286) |
| Ex 1 | | | | | |
| 0 Mrad | 11.4 | 5210 (35922) | 350 | 10 (68.9) | 205 (1413) |
| 1.5 | 11.4 | 5270 (36335) | 320 | 9 (62.1) | 200 (1379) |
| 3.0 | 11.2 | 5320 (36680) | 330 | 10 (68.9) | 199 (1372) |
| 4.5 | 10.4 | 5310 (36611) | 320 | 9 (62.1) | 223 (1538) |
| Ex 2 | | | | | |
| 0 Mrad | 14.5 | 4900 (33784) | 340 | 11 (75.8) | 176 (1213) |
| 1.5 | 11.2 | 5150 (35508) | 330 | 10 (68.9) | 199 (1372) |

TABLE 2 (cont'd)

| | Transverse Direction | | | | |
|---|---|---|---|---|---|
| | % YE | PSI YS (kPa) | % BE (000) | PSI BS (000) (kPa x $10^3$) | PSI MODULUS (kPa) |
| Comp 1 | | | | | |
| 3.0 | 11.9 | 5220 (35991) | 320 | 10 (68.9) | 191 (1317) |
| 4.5 | 11.9 | 4870 (33577) | 340 | 10 (68.9) | 182 (1255) |
| 0 Mrad | 12.0 | 4580 (31578) | 340 | 10 (68.9) | 168 (1158) |
| 1.5 | 10.5 | 4760 (32819) | 330 | 9 (62.1) | 184 (1269) |
| 3.0 | 11.0 | 4770 (32888) | 320 | 8 (55.2) | 182 (1255) |
| 4.5 | 10.7 | 5350 (36887) | 310 | 9 (62.1) | 198 (1365) |
| Ex 1 | | | | | |
| 0 Mrad | 10.9 | 4350 (29992) | 330 | 10 (68.9) | 172 (1186) |
| 1.5 | 9.6 | 4980 (34336) | 310 | 9 (62.1) | 196 (1351) |
| 3.0 | 9.1 | 4840 (33371) | 310 | 9 (62.1) | 214 (1475) |
| 4.5 | 9.1 | 5020 (34612) | 330 | 9 (62.1) | 199 (1372) |
| Ex 2 | | | | | |
| 0 Mrad | 11.8 | 4430 (30544) | 310 | 9 (62.1) | 147 (1014) |
| 1.5 | 10.1 | 5110 (35232) | 330 | 10 (68.9) | 176 (1213) |
| 3.0 | 8.7 | 5130 (35370) | 320 | 9 (62.1) | 220 (1517) |
| 4.5 | 9.9 | 4530 (31233) | 330 | 9 (62.1) | 164 (1131) |

Some changes were noted in the physical properties of the film upon irradiation up to 4.5 Mrads. There was about a 10% drop in Break Elongation and about a 15% drop in Tensile Strength at 4.5 Mrads. There was generally a slight improvement in Break Elongation and Tensile Strength when using the stabilizers.

Toughness data was calculated for 2.5 mil ($6.4 \times 10^{-2}$ mm) film irradiated on a roll. The toughness is $BE \times BS \times 10^6$. The percent toughness retained is the average toughness for toughness in the machine and transverse directions. It is calculated by toughness at a given irradiation divided by toughness with no radiation times 100. The results are summarized in Tables 3 and 4 below.

TABLE 3

| | | | Toughness ($BE\times BS\times 10^6$) | | |
|---|---|---|---|---|---|
| | Mrad | | 0 | 1.5 | 3.0 |
| 4.5 | | | | | |
| Comp 1 | MD | 3.44 | 3.74 | 2.92 | 2.57 |
| | TD | 3.50 | 3.10 | 2.67 | 2.67 |
| Ex 1 | MD | 3.50 | 2.96 | 3.19 | 2.81 |
| | TD | 3.31 | 2.71 | 2.66 | 3.00 |
| Ex 2 | MD | 3.75 | 3.17 | 3.13 | 3.40 |
| | TD | 2.90 | 3.23 | 3.03 | 3.05 |

TABLE 4

| | %Toughness Retained | | |
|---|---|---|---|
| Mrad | 1.5 | 3.0 | 4.5 |
| Comp 1 | 99 | 81 | 76 |
| Ex 1 | 84 | 86 | 86 |
| Ex 2 | 98 | 94 | 98 |

The stabilized material had greater toughness retention time than the unstabilized material upon irradiation.

Examples 3—4

A series of films was prepared in the same manner as those in Examples 1 and 2. These films were irradiated on the roll with minimum oxygen exposure. The films were between 1.0 and 1.2 mils ($2.5 \times 10^{-2}$ and $3.0 \times 10^{-2}$ mm) thick. Viscosity was measured in the same manner as in Examples 1 and 2 and is summarized in Table 5.

TABLE 5

| | Comp 2 | Ex 3 | Ex 4 |
|---|---|---|---|
| Nylon (8207) Wt% | 100 | 99 | 99 |
| Irganox™ 1098 | - | 1 | - |
| Irganox™ 1010 | - | - | 1 |
| Viscosity @ | | | |
| 0 Mrad | 1.86 | 1.82 | 1.94 |
| 1.5 | 1.54 | 1.67 | 1.69 |
| 3.0 | 1.33 | 1.51 | 1.51 |
| 5.0 | 1.43 | 1.55 | 1.39 |

The viscosities of the Comparative 2 film having a thickness of about 1 mil ($2.5 \times 10^{-2}$ mm) were generally lower at 3.0 and 5.0 Mrads when compared to the 2.5 mils ($6.4 \times 10^{-2}$ mm) shown in Table 1. This may be due to slightly more oxygen exposure to the 1 mil ($2.5 \times 10^{-2}$ mm) film. An increasing viscosity at the 5.0 Mrad versus 3.0 Mrad suggests the cross-linking reaction at this point are increasing molecular weight faster than chain scission is decreasing the molecular weight. It is noted that there is a slight viscosity improvement at 1.5 and 3.0 Mrads with the addition of stabilizer.

Table 6 below shows physical property data measured in the same manner as the physical property data for Examples 1 and 2 shown in Table 2.

TABLE 6

| | thickness (mils) (mm) | % YE | Machine Direction PSIX10$^3$ (KPax10$^3$) YS | % BE | PSIX10$^3$ (KPax10$^3$) BS | PSIX10$^5$ (KPax10$^3$) Modulus |
|---|---|---|---|---|---|---|
| Comp 2 | | | | | | |
| 0 Mrad | 1.1 (2.8x10$^{-2}$) | 17.1 | 4.0 (27.6) | 260 | 9.8 (67.6) | 1.17 (8.07) |
| 1.5 | | 18.0 | 4.8 (33.1) | 250 | 8.3 (57.2) | 1.44 (9.93) |
| 3.0 | | 14.0 | 4.7 (32.4) | 220 | 6.9 (47.6) | 1.11 (7.65) |
| 5.0 | | 16.2 | 4.5 (31.0) | 230 | 7.2 (49.6) | 1.27 (8.76) |
| Ex 3 | | | | | | |
| 0 Mrad | 1.1 (2.8x10$^{-2}$) | 19.0 | 4.0 (27.6) | 250 | 8.3 (57.2) | 1.19 (8.20) |
| 1.5 | | 15.5 | 4.6 (31.7) | 280 | 9.1 (62.7) | 1.38 (9.51) |
| 3.0 | | 17.5 | 4.6 (31.7) | 290 | 9.6 (66.2) | 1.37 (9.45) |
| 5.0 | | 15.2 | 4.6 (31.7) | 280 | 8.6 (59.2) | 1.38 (9.51) |
| Ex 4 | | | | | | |
| 0 Mrad | 1.1 (2.8x10$^{-2}$) | 16.4 | 4.5 (31.) | 260 | 10.2 (70.3) | 1.48 (10.20) |
| 1.5 | | 17.6 | 4.4 (30.3) | 270 | 9.0 (62.1) | 1.43 (9.86) |
| 3.0 | | 15.4 | 4.3 (29.6) | 240 | 7.3 (50.3) | 1.23 (8.48) |
| 5.0 | | 16.9 | 4.5 (31.0) | 270 | 8.4 (57.9) | 1.24 (8.55) |
| 0 Mrad | 1.1 (2.8x10$^{-2}$) | 14.5 | 4.0 (27.6) | 270 | 6.8 (46.9) | 1.36 (9.38) |
| 1.5 | | 12.4 | 4.7 (32.4) | 280 | 6.8 (46.9) | 1.78 (12.27) |
| 3.0 | | 10.8 | 4.7 (32.4) | 260 | 6.4 (44.1) | 1.41 (9.72) |
| 5.0 | | 12.0 | 4.8 (33.1) | 200 | 3.9 (26.9) | 1.55 (10.69) |
| Ex 3 | | | | | | |
| 0 Mrad | 1.1 (2.8x10$^{-2}$) | 14.1 | 4.1 (28.3) | 260 | 6.4 (44.1) | 1.34 (9.23) |
| 1.5 | | 13.2 | 4.4 (30.3) | 300 | 8.4 (57.9) | 1.45 (10.0) |
| 3.0 | | 10.0 | 5.0 (34.5) | 280 | 7.0 (48.3) | 1.59 (10.96) |
| 5.0 | | 12.7 | 4.8 (33.1) | 270 | 6.9 (47.6) | 1.29 (8.89) |

TABLE 6 (cont'd)

| | thickness (mils) (mm) | % YE | Machine Direction PSIX10$^3$ (KPax10$^3$) YS | % BE | PSIX10$^3$ (KPax10$^3$) BS | PSIX10$^5$ (KPax10$^3$) Modulus |
|---|---|---|---|---|---|---|
| Comp 2 | | | | | | |
| Ex 4 | | | | | | |
| 0 Mrad | 1.1 (2.8x10$^{-2}$) | 11.5 | 4.6 (31.7) | 270 | 6.5 (44.8) | 1.63 (11.24) |
| 1.5 | | 12.3 | 4.7 (32.4) | 270 | 6.4 (44.1) | 1.50 (10.34) |
| 3.0 | | 12.2 | 4.6 (31.7) | 260 | 6.2 (42.7) | 1.50 (10.34) |
| 5.0 | | 12.3 | 4.5 (31.0) | 270 | 6.3 (43.4) | 1.46 (10.07) |

There was considerable scatter in the physical property data due to the poor quality of the film in this test. However, the break elongation and break strength were generally improved by the addition of stabilizer.

Toughness values were measured in the same manner as in Examples 1 and 2. Results are summarized in Tables 7 and 8 below, corresponding to Tables 3 and 4 of Examples 1 and 2.

TABLE 7

| | | Mrad | Toughness (BE$_X$BS$_X$ 10$^6$) 0 | 1.5 | 3.0 | 5.0 |
|---|---|---|---|---|---|---|
| Comp 2 | MD | | 2.5 | 2.1 | 1.5 | 1.6 |
| | TD | | 1.8 | 1.9 | 1.7 | .8 |
| Ex 3 | MD | | 2.1 | 2.5 | 2.8 | 2.4 |
| | TD | | 1.7 | 2.5 | 2.0 | 1.9 |
| Ex 4 | MD | | 2.7 | 2.4 | 1.8 | 2.3 |
| | TD | | 1.8 | 1.7 | 1.6 | 1.7 |

TABLE 8

| | Mrad | %Toughness Retained 0 | 1.5 | 3.0 | 5.0 |
|---|---|---|---|---|---|
| Comp 2 | | | 90 | 77 | 54 |
| Ex 3 | | | 133 | 126 | 113 |
| Ex 4 | | | 92 | 78 | 90 |

In Table 7 the toughness values were generally poorer than the toughness values for the film of Examples 1 and 2. In Examples 1 and 2 the film tested had a thickness of 2.5 mils (6.4 × 10$^{-2}$ mm) compared to 1 mil (2.5 × 10$^{-2}$ mm) in Examples 3 and 4. It is noted that the film tested was of poorer quality. It is speculated that the poorer values may be due in part to the thinner films being more accessible to oxygen due to their higher surface to volume ratio. However, the addition of the stabilizer improved the toughness retention at all measured exposures in Examples 3 and.

Examples 5—7

Polyepsiloncaprolactam sold by Allied Corporation as CAPRON® 8209 having a formic acid viscosity of 125, was evaluated in the stabilizer compositions of the present invention.

In examples 6 and 7 the stabilizers used included Goodrite™ 3125 having the formula:

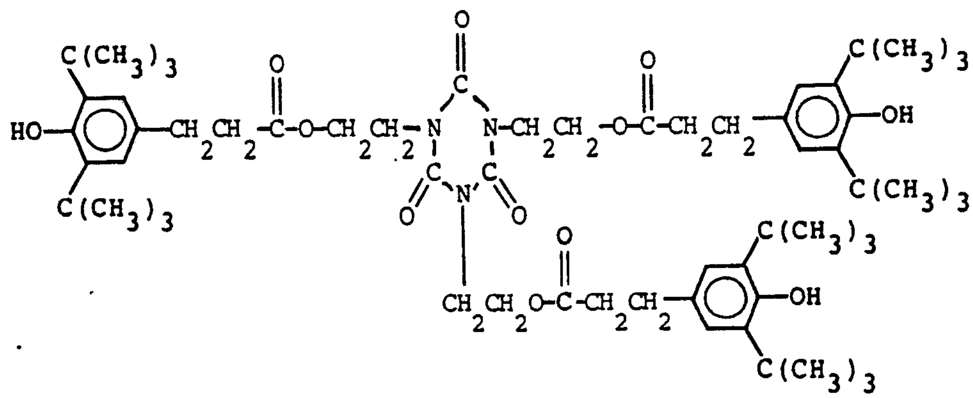

Example 7 also includes Weston 626 having the formula:

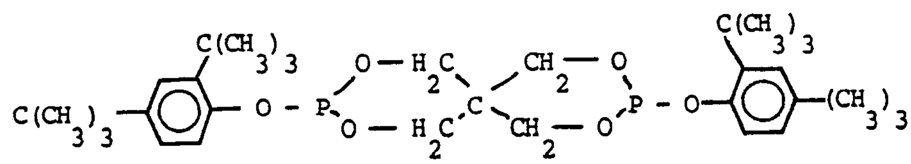

The compositions used and viscosity measured in accordance with the procedures outlined in Examples 1 and 2 are summarized in Table 9.

TABLE 9

| | Comp 3 | Ex 5 | Ex 6 | Ex 7 |
|---|---|---|---|---|
| Nylon wt% | 100 | 99.9 | 99.7 | 99.9 |
| Irganox™ 1098 | - | .1 | - | - |
| Goodrite™ 3125 | - | - | .3 | 0.05 |
| Weston™ 626 | - | - | - | 0.05 |
| Viscosity @ | | | | |
| 0 Mrad | 2.49 | 2.36 | 2.43 | 2.45 |
| 1.5 | 2.16 | 2.19 | 2.32 | 2.22 |
| 3.0 | 1.93 | 2.07 | 2.17 | 2.15 |
| 5.0 | 1.95 | 1.85 | 2.16 | 1.73 |

Viscosity values in Examples 5—7 were maintained up to doses of 3.0 Mrads. At 5.0 Mrads it is speculated that the erratic results were caused by the competing crosslinking reaction.

Physical properties were measured in accordance with ASTM Test No. D882 at a 20 inch (50.8 cm) head speed using a 2 inch (5.08 cm) gauge length. Measurements were only made in the machine direction. Results are summarized on Table 10. Toughness results are summarized in Tables 11 and 12

TABLE 10

| | Thickness (mils) (mm) | % YE | PSIX$10^4$ (KPax$10^4$) YS | & BE | PSIX$10^4$ (KPax$10^4$) BS |
|---|---|---|---|---|---|
| Comp 3 | | | | | |
| 0 Mrad | 2.3 (5.8) | 14.5 | .57 (3.93) | 310 | 1.35 (9.31) |
| 1.5 | 2.3 (5.8) | 19.3 | .58 (4.00) | 310 | 1.28 (8.83) |
| 3.0 | 2.4 (6.1) | 18.7 | .58 (4.00) | 310 | 1.20 (8.27) |
| 5.0 | 2.3 (5.8) | 20.5 | .58 (4.00) | 310 | 1.24 (8.55) |
| Ex 5 | | | | | |
| 0 Mrad | 2.5 (6.4) | 6.2 | .79 (5.45) | 440 | 1.30 (8.96) |
| 1.5 | 2.5 (6.4) | 6.0 | .87 (6.00) | 450 | 1.32 (9.10) |
| 3.0 | 2.5 (6.4) | 6.1 | .88 (6.07) | 440 | 1.21 (8.34) |
| 5.0 | 2.7 (6.9) | 7.0 | .73 (5.03) | 460 | 1.26 (8.69) |
| Ex 6 | | | | | |
| 0 Mrad | 1.9 (4.8) | 17.7 | .60 (4.14) | 390 | 1.18 (8.14) |
| 1.5 | 1.9 (4.8) | 9.4 | .73 (5.03) | 360 | 1.11 (7.65) |
| 3.0 | 1.9 (4.8) | 25.4 | .51 (3.52) | 420 | 1.39 (9.58) |
| 5.0 | 1.7 (4.3) | 22.0 | .59 (4.07) | 410 | 1.27 (8.76) |
| Ex 7 | | | | | |
| 0 Mrad | 2.0 (5.1) | 7.5 | .74 (5.10) | 380 | 1.23 (8.48) |
| 1.5 | 2.0 (5.1) | 8.3 | .68 (4.67) | 360 | 1.09 (7.52) |
| 3.0 | 2.0 (5.1) | 9.6 | .55 (3.79) | 400 | 1.24 (8.55) |
| 5.0 | 2.0 (5.1) | 9.1 | .66 (4.55) | 400 | 1.24 (8.55) |

TABLE 11

| | Mrad | Toughness (BExBSx$10^6$) 0 | 1.5 | 3.0 | 4.5 |
|---|---|---|---|---|---|
| Comp 3 | | 4.2 | 4.0 | 3.7 | 3.8 |
| Ex 5 | | 5.7 | 5.9 | 5.3 | 5.8 |
| Ex 6 | | 4.6 | 4.0 | 5.8 | 5.2 |
| Ex 7 | | 4.7 | 3.9 | 5.0 | 5.0 |

TABLE 12

| | Mrad | %Toughness Retained 0 | 1.5 | 3.0 | 4.5 |
|---|---|---|---|---|---|
| Comp 3 | | | 95 | 88 | 90 |
| Ex 5 | | | 104 | 93 | 102 |
| Ex 6 | | | 87 | 126 | 113 |
| Ex 7 | | | 83 | 106 | 106 |

Physical properties and toughness were retained when using the composition of the present invention.

Examples 8—10

Examples 5—7 were repeated by substituting an amorphous terpolymer of caprolactam, 5 mol percent terephthalic acid, and 5 mol percent p-amino cyclohexyl amine in place of the polyepsiloncaprolactam (Nylon 6). The composition and physical test results are summarized in Tables 13—16.

TABLE 13

| | Comp 4 | Ex 8 | Ex 9 | Ex 10 |
|---|---|---|---|---|
| Terpolymer wt% | 100 | 99.9 | 99.7 | 99.9 |
| Irganox™ 1098 | - | .1 | - | - |
| Goodrite™ 3125 | - | - | .3 | 0.05 |
| Weston™ 626 | - | - | - | 0.05 |
| Viscosity @ | | | | |
| 0 Mrad | 1.81 | 1.76 | 1.74 | 1.83 |
| 1.5 | 1.70 | 1.77 | 1.75 | 1.74 |
| 3.0 | 1.66 | 1.70 | 1.79 | 1.77 |
| 5.0 | 1.66 | 1.83 | 1.81 | 1.81 |

TABLE 14

| | Thickness (mils) (mm) | Machine Direction % YE | PSIX10$^4$ (KPax10$^4$) YS | & BE | PSIX10$^4$ (KPax10$^4$) BS |
|---|---|---|---|---|---|
| Comp 4 | | | | | |
| 0 Mrad | 1.2 (3.0) | 11.6 | .44 (3.03) | 310 | .73 (5.03) |
| 1.5 | 1.2 (3.0) | 9.6 | .49 (3.38) | 310 | .63 (4.34) |
| 3.0 | 1.3 (3.3) | 6.8 | .53 (3.65) | 290 | .66 -(4.55) |
| 5.0 | 1.3 (3.3) | 8.0 | .48 (3.31) | 300 | .83 (5.72) |
| Ex 8 | | | | | |
| 0 Mrad | 2.9 (7.4) | 3.8 | .80 (5.52) | 470 | 1.08 (7.45) |
| 1.5 | 2.7 (6.9) | 4.9 | .74 (5.10) | 490 | 1.04 (7.17) |
| 3.0 | 2.8 (7.1) | 4.7 | .60 (4.14) | 480 | 1.02) (7.03) |
| 5.0 | 2.7 (6.9) | 5.9 | .69 (4.76) | 480 | 1.00 (6.89) |
| Ex 9 | | | | | |
| 0 Mrad | 2.2 (5.6) | 3.7 | .81 (5.58) | 480 | 1.28 (8.83) |
| 1.5 | 2.0 (5.1) | 4.5 | .30 (2.07) | 450 | 1.25 (8.62) |
| 3.0 | 2.3 (5.8) | 4.6 | .41 (2.83) | 480 | 1.20 (8.27) |
| 5.0 | 2.1 (5.3) | 3.4 | .24 (1.65) | 480 | 1.15 (7.93) |
| Ex 10 | | | | | |
| 0 Mrad | 1.4 (3.6) | 4.9 | .47 (3.24) | 460 | 1.14 (7.86) |
| 1.5 | 1.9 (4.8) | 4.7 | .89 (6.14) | 480 | 1.12 (7.72) |
| 3.0 | 2.3 (5.8) | 4.4 | .25 (1.72) | 480 | 1.12 (7.72) |
| 5.0 | 2.0 (5.1) | 3.9 | .54 (3.72) | 470 | 1.17 (8.07) |

TABLE 14 (cont'd)

| | Thickness (mils) (mm) | Transverse Direction % YE | PSIX10$^4$ (KPax10$^4$) YS | & BE | PSIX10$^4$ (KPax10$^4$) BS |
|---|---|---|---|---|---|
| Comp 4 | | | | | |
| 0 Mrad | 2.3 (5.8) | 10.5 | .47 (3.24) | 250 | .58 (4.00) |
| 1.5 | 2.3 (5.8) | 10.9 | .49 (3.38) | 290 | .64 (4.41) |
| 3.0 | 2.4 (6.1) | 8.0 | .51 (3.52) | 300 | .67 (4.62) |
| 5.0 | 2.3 (5.8) | 10.2 | .50 (3.45) | 320 | .74 (5.10) |

TABLE 15

| | Average Thickness in mils (mm) | Mrad | Toughness (BExBSx10$^6$) 0 | 1.5 | 3.0 | 4.5 |
|---|---|---|---|---|---|---|
| Comp 4 | 1.3 (3.3) | | 2.3 | 2.0 | 1.9 | 2.7 |
| Ex 8 | 2.8 (7.1) | | 5.1 | 5.1 | 4.9 | 4.8 |
| Ex 9 | 2.1 (5.3) | | 6.1 | 5.6 | 5.8 | 5.5 |
| Ex 10 | 1.9 (4.8) | | 5.2 | 5.4 | 5.4 | 5.5 |

TABLE 16

| | | Mrad | %Toughness Retained 0 | 1.5 | 3.0 | 4.5 |
|---|---|---|---|---|---|---|
| Comp 4 | 1.3 (3.3) | | | 87 | 83 | 117 |
| Ex 8 | 2.8 (7.1) | | | 100 | 96 | 94 |
| Ex 9 | 2.1 (5.3) | | | 92 | 95 | 90 |
| Ex 10 | 1.9 (4.8) | | | 104 | 104 | 106 |

It was found that the use of the stabilizer with the amorphous polyamide actually improved physical properties in addition to providing an improvement in retention of the physical properties upon exposure to radiation.

Examples 11—14

Films made of the composition of the present invention were irradiated in sheet form. Between 10 and 20, 8½ inches by 11 inches (21.59 cm × 27.94 cm) sheets were placed in an envelope. Each film sheet was separated by a sheet of white paper. Several envelopes were placed in a cardboard box which was irradiated. The films were made of Nylon 6 of the type used in Examples 1 and 2. The stabilized compositions used are summarized in Table 17 below. The stabilizers used were combinations of Goodrite™ 3125, described above, Tinuvin™ 770 and Weston™ MDW618. Tinuvin™ 770 is bis 2-2-6-6-t-methyl piperridinyl-4-sebecate, and Weston 618 has the formula:

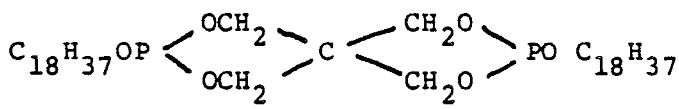

Compositions and viscosity results for the nylon films, which were 50,8 µm (2 mils) thick, are summarized in Table 17.

TABLE 17

| | Comp 5 | Ex 11 | Ex 12 | Ex 13 | Ex 14 |
|---|---|---|---|---|---|
| Nylon wt% | 100 | 99.7 | 99.85 | 99 | 99.755 |
| Goodrite™ 3125 | - | .3 | .05 | - | .095 |
| Tinuvin™ 770 | - | - | .1 | - | - |
| Irganox™ 1098 | - | - | - | 1 | - |
| Weston™ MDW618 | - | - | - | - | .15 |
| Viscosity @ | | | | | |
| 0 Mrad | 1.90 | 1.92 | 1.89 | 1.96 | 1.90 |
| 1.5 | 1.63 | 1.68 | 1.63 | 1.72 | 1.58 |
| 3.0 | 1.46 | 1.54 | 1.43 | 1.54 | 1.45 |
| 5.0 | 1.31 | 1.39 | 1.30 | 1.44 | 1.33 |

Physical properties and toughness tests were conducted in accordance with the same procedures as used in Examples 5—7. Results are summarized on Tables 18—20.

TABLE 18

| | Machine Direction | | | |
|---|---|---|---|---|
| | % | PSIX10⁴ (KPax10⁴) | % | PSIX10⁴ (KPax10⁴) |
| | YE | YS | BE | BS |
| Comp 5 | | | | |
| 0 Mrad | 13.9 | 0.54 (3.72) | 320 | 1.35 (9.31) |
| 1.5 | 5.2 | 0.82 (5.65) | 245 | 1.22 (8.41) |
| 3.0 | 5.2 | 0.78 (5.38) | 250 | 1.07 (7.38) |
| 5.0 | 5.8 | 0.72 (4.96) | 260 | 1.08 (7.45) |

TABLE 18 (Cont'd)

| | Machine Direction | | | |
|---|---|---|---|---|
| | % YE | PSIX10$^4$ (KPax10$^4$) YS | % BE | PSIX10$^4$ (KPax10$^4$) BS |
| Ex 11 | | | | |
| 0 Mrad | 12.3 | 0.57 (3.93) | 325 | 1.60 (11.03) |
| 1.5 | 4.9 | 0.79 (5.45) | 280 | 1.34 (9.24) |
| 3.0 | 7.1 | 0.73 (5.03) | 255 | 1.06 (7.31) |
| 5.0 | 10.8 | 0.59 (4.07) | 250 | 1.02 (7.03) |
| Ex 12 | | | | |
| 0 Mrad | 12.7 | 0.60 (4.14) | 290 | 1.41 (9.72) |
| 1.5 | 5.7 | 0.69 (4.76) | 260 | 1.20 (8.27) |
| 3.0 | 5.8 | 0.71 (4.90) | 285 | 1.28 (8.83) |
| 5.0 | 12.0 | 0.49 (3.38) | 265 | 1.09 (7.52) |
| Ex 13 | | | | |
| 0 Mrad | 9.7 | 0.63 (4.34) | 270 | 1.22 (8.41) |
| 1.5 | 5.7 | 0.72 (4.96) | 250 | 1.13 (7.79) |
| 3.0 | 5.2 | 0.80 (5.52) | 250 | 1.08 (7.45) |
| 5.0 | 10.3 | 0.59 (4.07) | 280 | 1.20 (8.27) |
| Ex 14 | | | | |
| 0 Mrad | 12.3 | 0.58 (4.00) | 300 | 1.39 (9.58) |
| 1.5 | 5.9 | 0.69 (4.76) | 250 | 1.06 (7.31) |
| 3.0 | 5.7 | 0.71 (4.90) | 260 | 1.10) (7.58) |
| 5.0 | 5.8 | 0.69 (4.76) | 235 | 0.95 (6.55) |

TABLE 18 (cont'd)

| | Transverse Direction | | | |
|---|---|---|---|---|
| | % | PSIX10 $^4$ (KPax10 $^4$) | % | PSIX10 $^4$ (KPax10 $^4$) |
| | YE | YS | BE | BS |
| Comp 5 | | | | |
| 0 Mrad | 13.9 | INSUFFICIENT SAMPLE | | |
| 1.5 | 4.6 | 0.71 (4.90) | 285 | 0.94 (6.48) |
| 3.0 | 5.2 | 0.74 (5.10) | 290 | 0.74 (5.10) |
| 5.0 | 5.8 | 0.71 (4.90) | 300 | 0.87 (6.00) |
| Ex 11 | | | | |
| 0 Mrad | 8.7 | 0.65 (4.48) | 355 | 1.10) (7.58) |
| 1.5 | 3.7 | 0.82 (5.65) | 315 | 1.04) (7.17) |
| 3.0 | 5.1 | 0.75 (5.17) | 320 | 0.98 (6.76) |
| 5.0 | 6.6 | 0.52 (3.59) | 330 | 0.99 (6.83) |
| Ex 12 | | | | |
| 0 Mrad | 9.7 | 0.56 (3.86) | 350 | 1.17 (8.07) |
| 1.5 | 4.7 | 0.71 (4.90) | 300 | 0.88 (6.07) |
| 3.0 | 5.5 | 0.78 (5.38) | 300 | 0.79 (5.45) |
| 5.0 | 7.9 | 0.49 (3.38) | 310 | 0.90 (6.21) |
| Ex 13 | | | | |
| 0 Mrad | 9.1 | 0.59 (4.07) | 370 | 1.25 (8.62) |
| 1.5 | 4.3 | 0.78 (5.38) | 310 | 1.01 (6.96) |
| 3.0 | 4.9 | 0.49 (3.38) | 300 | 0.82 (5.65) |
| 5.0 | 5.5 | 0.65 (4.48) | 295 | 0.81 (5.58) |

TABLE 18 (Cont'd)

| | Machine Direction | | | |
|---|---|---|---|---|
| | % | PSIX$10^4$ (KPax$10^4$) | % | PSIX$10^4$ (KPax$10^4$) |
| | YE | YS | BE | BS |
| Ex 14 | | | | |
| 0 Mrad | INSUFFICIENT SAMPLE | | | |
| 1.5 | 4.6 | 0.78 (5.38) | 320 | 1.03 (7.10) |
| 3.0 | 4.9 | 0.72 (4.96) | 290 | 0.72 (4.96) |
| 5.0 | 4.8 | 0.75 (5.17) | 305 | 0.82 (5.65) |

TABLE 19

| | Toughness* (BExBSx$10^6$) | | | |
|---|---|---|---|---|
| Mrad | 0 | 1.5 | 3.0 | 4.5 |
| Comp 5 | 4.32** | 2.84 | 2.42 | 2.71 |
| Ex 11 | 4.56 | 3.51 | 2.92 | 2.90 |
| Ex 12 | 4.10 | 2.88 | 3.01 | 2.84 |
| Ex 13 | 3.96 | 2.98 | 2.58 | 2.90 |
| Ex 14 | 4.17** | 2.98 | 2.48 | 2.37 |

TABLE 20

| | %Toughness* Retained | | | |
|---|---|---|---|---|
| Mrad | 0 | 1.5 | 3.0 | 4.5 |
| Comp 5 | | 65 | 56 | 63 |
| Ex 11 | | 78 | 66 | 66 |
| Ex 12 | | 70 | 74 | 70 |
| Ex 13 | | 77 | 68 | 77 |
| Ex 14 | | 72 | 60 | 57 |

*Average of Transverse and Machine direction

**Only Machine direction data available

Generally physical properties of the composition in Examples 11—14 did not deteriorate to the extent that the unstabilized Comp. 5 deteriorated.

Examples 15—17

In Examples 15—17 CAPRON® 8209 Nylon 6 was evaluated with various stabilizers by irradiation in sheet form as described above. The compositions used, the properties evaluated including reduced viscosities, tensile properties and toughness are summarized in Tables 21—24. The sheets were about 2 mils ($5.1 \times 10^{-2}$ mm) thick.

TABLE 21

| | Comp 6 | Ex 15 | Ex 16 | Ex 17 |
|---|---|---|---|---|
| Nylon wt% | 100 | 99.9 | 99.7 | 99.9 |
| Irganox™ 1098 | - | .1 | - | - |
| Goodrite™ 3125 | - | - | .3 | 0.05 |
| Weston™ MDW626 | - | - | - | 0.05 |
| Viscosity @ | | | | |
| 0 Mrad | 2.49 | 2.36 | 2.43 | 2.45 |
| 1.5 | 1.89 | 2.06 | 2.00 | 2.00 |
| 3.0 | 1.63 | 1.85 | 1.79 | 1.71 |
| 5.0 | 1.49 | 1.77 | 1.54 | 1.54 |

The viscosity of the composition of Examples 15—17 did not drop as much as the 100 percent nylon Comp. 6.

TABLE 22

| | Machine Direction | | | |
|---|---|---|---|---|
| | % YE | PSIX10$^4$ (KPax10$^4$) YS | % BE | PSIX10$^4$ (KPax10$^4$) BS |
| Comp 6 | | | | |
| 0 Mrad | 14.5 | 0.57 (3.93) | 310 | 1.35 (9.31) |
| 1.5 | 5.9 | 0.69 (4.76) | 230 | 1.14 (7.86) |
| 3.0 | 5.4 | 0.82 (5.65) | 230 | 1.14 (7.86) |
| 5.0 | 6.7 | 0.68 (4.69) | 250 | 1.16 (8.00) |
| Ex 15 | | | | |
| 0 Mrad | 6.2 | 0.79 (5.45) | 440 | 1.30 (8.96) |
| 1.5 | 5.2 | 0.74 (5.10) | 290 | 1.26 (8.69) |
| 3.0 | 6.0 | 0.63 (4.34) | 290 | 1.15 (7.92) |
| 5.0 | 6.2 | 0.63 (4.34) | 290 | 1.18 (8.14) |

TABLE 22 (cont'd)

| | Transverse Direction | | | |
|---|---|---|---|---|
| | % | PSIX10$^4$ (KPax10$^4$) | % | PSIX10$^4$ (KPax10$^4$) |
| | YE | YS | BE | BS |
| Ex 16 | | | | |
| 0 Mrad | 17.7 | 0.60 (4.14) | 390 | 1.18 (8.14) |
| 1.5 | 4.8 | 0.80 (5.52) | 270 | 1.33 (9.17) |
| 3.0 | 5.3 | 0.76 (5.24) | 250 | 1.20 (8.27) |
| 5.0 | 7.6 | 0.63 (4.34) | 235 | 0.99 (6.83) |
| Ex 17 | | | | |
| 0 Mrad | 7.5 | 0.74 (5.10) | 380 | 1.23 (8.48) |
| 1.5 | 5.8 | 0.71 (4.90) | 305 | 1.56 10.76 |
| 3.0 | 5.2 | 0.82 (5.65) | 245 | 1.13 (7.79) |
| 5.0 | 5.2 | 0.80 (5.52) | 250 | 1.13 (7.79) |
| Comp 6 | | | | |
| 0 Mrad | 9.6 | 0.66 (4.55) | 385 | 1.24 (8.55) |
| 1.5 | 4.7 | 0.70 (4.83) | 300 | 1.00 (6.89) |
| 3.0 | 5.1 | 0.77 (5.31) | 290 | 0.90 (6.21) |
| 5.0 | 5.3 | 0.71 (4.90) | 310 | 0.89 (6.14) |
| Ex 15 | | | | |
| 0 Mrad | 10.2 | 0.55 (3.79) | 350 | 1.20 (8.27) |
| 1.5 | 4.8 | 0.78 (5.38) | 325 | 1.19 (8.20) |
| 3.0 | 5.3 | 0.72 (4.96) | 290 | 1.00 (6.89) |
| 5.0 | 6.4 | 0.58 (4.96) | 310 | 1.02 (7.03) |
| Ex 16 | | | | |
| 0 Mrad | 9.9 | 0.69 (4.76) | 350 | 1.11 (7.65) |
| 1.5 | 4.6 | 0.82 (5.65) | 315 | 1.00 (6.89) |
| 3.0 | 4.5 | 0.79 (5.45) | 260 | 0.80 (5.52) |
| 5.0 | 4.7 | 0.74 (5.10) | 320 | 0.95 (6.55) |

TABLE 22 (cont'd)

| | Transverse Direction | | | |
|---|---|---|---|---|
| | % | PSIX10$^4$ (KPax10$^4$) | % | PSIX10$^4$ (KPax10$^4$) |
| | YE | YS | BE | BS |
| Ex 17 | | | | |
| 0 Mrad | INSUFFICIENT SAMPLE | | | |
| 1.5 | 4.9 | 0.78 (5.38) | 340 | 1.18 (8.14) |
| 3.0 | 4.8 | 0.80 (5.52) | 310 | 0.97 (6.69) |
| 5.0 | 4.8 | 0.75 (5.17) | 260 | 0.86 (5.93) |

TABLE 23

| | Toughness* (BE×BS×10$^6$) | | | |
|---|---|---|---|---|
| Mrad | 0 | 1.5 | 3.0 | 4.5 |
| Comp 6 | 4.48 | 2.81 | 2.62 | 2.83 |
| Ex 15 | 4.96 | 3.76 | 3.12 | 3.29 |
| Ex 16 | 4.25 | 3.37 | 2.54 | 2.69 |
| Ex 17 | 4.67** | 4.39 | 2.87 | 2.53 |

TABLE 24

| | %Toughness Retained | | | |
|---|---|---|---|---|
| Mrad | 0 | 1.5 | 3.0 | 4.5 |
| Comp 6 | | 63 | 59 | 64 |
| Ex 15 | | 78 | 64 | 68 |
| Ex 16 | | 80 | 59 | 59 |
| Ex 17 | | 93 | 62 | 55 |

*Average of Transverse and Machine direction

**Only Machine direction data available

Physical properties of the stabilized compositions were better at 1.5 Mrad and comparable to the Comp. 6 at 3.0 and 5.0 Mrad. In Example 17 the positive effects of the hindered phenol are not apparent at the higher doses of radiation. It is speculated this is because the concentration of hindered phenol is approaching the lower concentration limits.

Examples 18—20

In Examples 18—20 the nylon terpolymer disclosed in Examples 8—10 was evaluated in 2 mil (5.1 × $10^{-2}$ mm) films irradiated in sheet form. The specific compositions used as well as the viscosities is summarized on Table 25 below. Physical properties and toughness are summarized in Tables 26 and 28. Testing was conducted according to the same procedures as in Examples 5—7.

TABLE 25

| | Comp 7 | Ex 18 | Ex 19 | Ex 20 |
|---|---|---|---|---|
| Terpolymer wt. % | 100 | 99.9 | 99.7 | 99.9 |
| Irganox™ 1098 | - | 0.1 | - | - |
| Goodrite™ 3125 | - | - | .3 | 0.05 |
| Weston™ MDW626 | - | - | - | 0.05 |
| Viscosity @ | | | | |
| 0 Mrad | 1.81 | 1.76 | 1.74 | 1.83 |
| 1.5 | 1.43 | 1.51 | 1.68 | 1.49 |
| 3.0 | 1.33 | 1.53 | 1.53 | 1.34 |
| 5.0 | 1.13 | 1.37 | 1.39 | 1.23 |

The viscosity of the Example compositions remained higher than the Comparative upon irradiation.

TABLE 26

| | Machine Direction | | | |
|---|---|---|---|---|
| | % YE | PSIX10$^4$ (KPax10$^4$) YS | % BE | PSIX10$^4$ (KPax10$^4$) BS |
| Comp 7 | | | | |
| 0 Mrad | 11.6 | 0.44 (3.03) | 310 | 0.73 (5.03) |
| 1.5 | 3.8 | 0.93 (6.41) | 240 | 0.93 (6.41) |
| 3.0 | 4.9 | 0.89 (6.14) | 7 | 0.90 (6.21) |
| 5.0 | | VERY BRITTLE | | |
| Ex 18 | | | | |
| 0 Mrad | 3.8 | 0.80 (5.52) | 470 | 1.08 (7.45) |
| 1.5 | 4.1 | 0.86 (5.93) | 290 | 0.89 (6.14) |
| 3.0 | 4.2 | 0.87 (6.00) | 305 | 0.88 (6.08) |
| 5.0 | 3.9 | 0.85 (5.86) | 4 | 0.88 (6.08) |
| Ex 19 | | | | |
| 0 Mrad | 3.7 | 0.81 (5.58) | 480 | 1.28 (8.83) |
| 1.5 | 3.7 | 0.93 (6.41) | 300 | 1.05 (7.24) |
| 3.0 | 3.7 | 0.93 (6.41) | 115 | 0.94 (6.48) |
| 5.0 | 6.3 | 0.93 (6.41) | 6 | 0.94 (6.48) |

TABLE 26 (cont'd)

| | Transverse Direction | | | |
|---|---|---|---|---|
| | % | PSIX10$^4$ (KPax10$^4$) | % | PSIX10$^4$ (KPax10$^4$) |
| | YE | YS | BE | BS |
| Ex 20 | | | | |
| 0 Mrad | 4.9 | 0.47 (3.24) | 460 | 1.14 (7.86) |
| 1.5 | 7.7 | 0.94 (6.48) | 30 | 0.95 (6.55) |
| 3.0 | 3.5 | 0.93 (6.41) | 145 | 0.93 (6.41) |
| 5.0 | 4.0 | 0.89 (6.14) | 14 | 0.91) (6.27) |
| Comp 7 | | | | |
| 0 Mrad | 10.5 | 0.47 (3.24) | 250 | 0.58 (4.00) |
| 1.5 | 6.0 | 0.93 (6.41) | 18 | 0.99 (6.82) |
| 3.0 | 4.8 | 0.93 (6.41) | 5 | 0.95 (6.55) |
| 5.0 | | VERY BRITTLE | | |
| Ex 18 | | | | |
| 0 Mrad | 7.6 | 0.79 (5.45) | 380 | 1.23 (8.48) |
| 1.5 | 3.2 | 0.80 (5.52) | 100 | 0.81 (5.58) |
| 3.0 | 3.5 | 0.91 (6.27) | 4 | 0.92 (6.34) |
| 5.0 | | VERY BRITTLE | | |
| Ex 19 | | | | |
| 0 Mrad | | INSUFFICIENT SAMPLE | | |
| 1.5 | 3.1 | 0.84 (5.79) | 250 | 0.88 (6.07) |
| 3.0 | 3.1 | 0.90 (6.21) | 130 | 0.92 (6.34) |
| 5.0 | 7.3 | 0.92 (6.34) | 7 | 0.94 (6.48) |
| Ex 20 | | | | |
| 0 Mrad | 8.8 | 0.69 (4.76) | 370 | 1.22 (8.41) |
| 1.5 | 5.1 | 0.84 (5.79) | 25 | 0.88 (6.07) |
| 3.0 | 3.6 | 0.90 (6.21) | 110 | 0.91 (6.27) |
| 5.0 | - | 0.85 (5.86) | 21 | 0.87 (6.00) |

TABLE 27

| | | Toughness (BE×BS×10^6) | | | |
|---|---|---|---|---|---|
| | Mrad | 0 | 1.5 | 3.0 | 4.5 |
| Comp 7 | MD | 2.3 | 2.23 | 0.06 | * |
| | TD | 1.45 | .18 | .05 | * |
| Ex 18 | MD | 5.08 | 2.58 | 2.24 | .04 |
| | TD | 4.67 | .08 | .04 | * |
| Ex 19 | MD | 6.10 | 3.15 | 1.08 | .06 |
| | TD | 6.10** | 2.20 | 1.2 | .07 |
| Ex 20 | MD | 5.24 | 0.29 | 1.35 | 0.13 |
| | TD | 4.51 | 0.22 | 1.00 | 0.18 |

TABLE 28

| | | %Toughness Retained | | | |
|---|---|---|---|---|---|
| | Mrad | 0 | 1.5 | 3.0 | 4.5 |
| Comp 7 | MD | | 97 | 3 | * |
| | TD | | 12 | 3 | * |
| Ex 18 | MD | | 51 | 44 | 0 |
| | TD | | 2 | 1 | * |
| Ex 19 | MD | | 52 | 18 | 1 |
| | TD | | 36 | 20 | 1 |
| Ex 20 | MD | | 5 | 26 | 2 |
| | TD | | 5 | 22 | 4 |

*Too brittle to test

**Estimated

Physical properties of the amorphous polyamide were found to be sensitive to irradiation when exposed to oxygen. However, the trend in values indicates an improvement when using the stabilizers of the present invention.

Examples 20—22

In Examples 20—22 CAPRON® Nylon 6 (8207) was evaluated with various stabilizers by irradiation in sheet form and tested in accordance with the procedures of Examples 5—7. The sheets were one mil ($2.5 \times 10^{-2}$ mm) thick. The compositions used, tensile properties, and toughness are summarized in Tables 28—31.

TABLE 28

| | Comp 8 | Ex 20 | Ex 21 | Ex 22 |
|---|---|---|---|---|
| Nylon (8207) wt% | 100 | 99.7 | 99.7 | 99.7 |
| Goodrite™ 3125 | - | 0.3 | - | 0.15 |
| Irganox™ 1098 | - | - | 0.3 | 0.15 |
| Viscosity@ | | | | |
| 0 Mrad | 1.95 | 1.89 | 1.90 | 1.93 |
| 1.8 | 1.32 | 1.69 | 1.70 | 1.66 |
| 3.9 | 1.08 | 1.37 | 1.58 | 1.33 |
| 5.3 | 1.11 | 1.12 | 1.28 | 1.19 |

TABLE 29

| | Machine Direction | | | | Transverse Direction | | | |
|---|---|---|---|---|---|---|---|---|
| | % | PSIx10$^4$ (KPax10$^4$) | % | PSIx10$^4$ (KPax10$^4$) | % | PSIx10$^4$ (KPax10$^4$) | % | PSIx10$^4$ (KPax10$^4$) |
| | YE | YS | BE | BS | YE | YS | BE | BS |
| Comp 8 | | | | | | | | |
| 0 Mrads | 9.4 | 0.74 (5.10) | 330 | 1.33 (9.17) | 10.0 | 0.64 (4.41) | 380 | 1.30 (8.96) |
| 1.7 " | 9.3 | 0.62 (4.27) | 280 | 0.90 (6.20) | 9.1 | 0.59 (4.07) | 330 | 0.95 (6.55) |
| 4.1 " | 8.3 | 0.64 (4.41) | 210 | 0.71 (4.90) | 6.9 | 0.67 (4.62) | 100 | 0.67 (4.62) |
| 5.5 " | 9.1 | 0.63 (4.34) | 85 | 0.63 (4.34) | 8.1 | 0.59 (4.07) | 123 | .61 (4.21) |
| Ex. 20 | | | | | | | | |
| 0 Mrads | 7.6 | 0.71 (4.90) | 320 | 1.29 (8.89) | 8.0 | 0.73 (5.03) | 290 | 0.92 (6.34) |
| 1.7 " | 10.1 | 0.56 (3.86) | 355 | 1.34 (9.34) | 8.8 | 0.59 (4.07) | 320 | 0.93 (6.41) |
| 4.1 " | 8.9 | 0.65 (4.48) | 295 | 1.02 (7.03) | 7.7 | 0.70 (4.82) | 210 | 0.84 (5.79) |
| 5.5 " | 7.4 | 0.72 (4.96) | 293 | 1.06 (7.31) | 7.6 | 0.64 (4.41) | 160 | 0.72) (4.96) |
| Ex. 21 | | | | | | | | |
| 0 Mrads | 8.1 | 0.68 (4.69) | 260 | 1.05 (7.24) | 8.6 | 0.71 (4.90) | 255 | 0.80 (5.52) |
| 1.7 " | 10.0 | 0.57 (3.93) | 280 | 1.00 (6.89) | 9.3 | 0.58 (4.00) | 330 | 0.97 (6.69) |
| 3.8 " | 8.0 | 0.66 (4.55) | 285 | 1.13 (7.79) | 7.2 | 0.67 (4.62) | 275 | 0.78 (5.38) |
| 5.3 " | 6.8 | 0.72 (5.32) | 150 | 0.74 (5.10) | 6.5 | 0.75 (5.17) | 160 | 0.77 (5.31) |
| Ex. 22 | | | | | | | | |
| 0 Mrads | 9.7 | 0.57 (3.93) | 340 | 1.57 (10.82) | 8.8 | 0.64 (4.41) | 370 | 1.39 (9.58) |
| 1.7 " | 8.4 | 0.66 (4.55) | 335 | 1.38 (9.51) | 8.0 | 0.68 (4.49) | 350 | 1.14 (7.86) |
| 3.8 " | 7.5 | 0.72 (4.96) | 303 | 1.12 (7.72) | 7.0 | 0.73 (5.03) | 258 | 0.74 (5.10) |
| 5.3 " | 6.8 | 0.73 (5.03) | 258 | 0.93 (6.41) | 8.0 | 0.64 (4.41) | 258 | 0.84 (5.79) |

TABLE 30

| | BE | x | BS | x $10^6$ |
|---|---|---|---|---|
| Mrad | 0 | 1.8 | 3.9 | 5.3 |
| Comp 8 | 4.67 | 2.83 | 1.08 | 0.65 |
| Ex. 20 | 3.40 | 3.87 | 2.38 | 2.12 |
| Ex. 21 | 2.39 | 3.00 | 2.69 | 1.17 |
| Ex. 22 | 5.24 | 4.31 | 2.66 | 2.29 |

TABLE 31

| | % Toughness Retained | | | |
|---|---|---|---|---|
| Mrad | 0 | 1.8 | 3.9 | 5.3 |
| Comp 8 | 100 | 61 | 23 | 14 |
| Ex. 20 | 100 | 114 | 70 | 62 |
| Ex. 21 | 100 | 126 | 113 | 49 |
| Ex. 22 | 100 | 82 | 51 | 44 |

The compositions of Examples 20—22 had improved property retention upon radiation. This is particularly shown by the percent toughness retained results in Table 31 and the viscosity retention in Table 28.

Examples 23—25

In Examples 23—25 CAPRON® 8290 Nylon 6 (8209) was evaluated with the various stabilizers by irradiation in sheet form and tested in accordance with the procedures of Examples 5—7. The sheets were one mil ($2.5 \times 10^{-2}$ mm) thick. The compositions used, tensile properties and toughness are summarized in Tables 32—35.

TABLE 32

| | Comp 9 | Ex. 23 | Ex. 24 | Ex. 25 |
|---|---|---|---|---|
| Nylon (8209) wt% | 100 | 99.7 | 99.7 | 99.7 |
| Goodrite™ 3125 | - | 0.3 | - | 0.15 |
| Irganox™ 1098 | - | - | 0.3 | 0.15 |
| Viscosity @ | | | | |
| | 0 Mrads | 2.37 | 2.42 | 2.512.35 |
| | 1.8 | 1.45 | 1.86 | 1.921.80 |
| | 3.9 | 1.02 | 1.55 | 1.621.62 |
| | 5.3 | 1.05 | 1.27 | 1.451.38 |

TABLE 33

| | Machine Direction | | | | Transverse Direction | | | |
|---|---|---|---|---|---|---|---|---|
| | % YE | PSIx10$^4$ (KPax10$^4$) YS | % BE | PSIx10$^4$ (KPax10$^4$) BS | % YE | PSIx10$^4$ (KPax10$^4$) YS | % BE | PSIx10$^4$ (KPax10$^4$) BS |
| Comp 9 | | | | | | | | |
| 0 Mrads | 11.0 | 0.69 (4.76) | 295 | 1.24 (8.55) | 10.6 | 0.65 (4.48) | 390 | 1.38 (9.51) |
| 1.7 " | 8.5 | 0.66 (4.55) | 300 | 1.17 (8.07) | 8.1 | 0.65 (4.48) | 310 | 0.84 (5.79) |
| 3.8 " | 9.3 | 0.63 (4.34) | 220 | 0.76 (5.24) | 6.4 | 0.61 (4.21) | 190 | 0.79 (5.45) |
| 5.3 " | 9.6 | 0.66 (4.55) | 200 | 0.77 (5.31) | 6.9 | 0.67 (4.62) | 153 | 0.72 (4.86) |
| Ex. 23 | | | | | | | | |
| 0 Mrads | 8.9 | 0.60 (4.14) | 320 | 1.34 (9.24) | 7.9 | 0.60 (4.14) | 355 | 1.29 (8.89) |
| 1.7 " | 7.9 | 0.71 (4.90) | 320 | 1.32 (9.10) | 8.2 | 0.65 (4.48) | 335 | 0.98 (6.76) |
| 3.8 " | 8.1 | 0.69 (4.76) | 318 | 1.28 (8.83) | 6.3 | 0.69 (4.76) | 285 | 0.94 (6.48) |
| 5.3 " | 9.4 | 0.65 (4.48) | 255 | 0.94 (6.48) | 7.2 | 0.69 (4.76) | 268 | 0.74 (5.10) |
| Ex. 24 | | | | | | | | |
| 0 Mrads | 12.3 | 0.60 (4.14) | 315 | 1.44 (9.93) | 11.6 | 0.70 (4.82) | 405 | 1.49 (10.27) |
| 1.7 " | 8.1 | 0.65 (4.48) | 285 | 1.23 (8.48) | 7.9 | 0.65 (4.48) | 310 | 0.87 (6.00) |
| 3.8 " | 8.7 | 0.64 (4.41) | 295 | 1.34 (9.24) | 6.3 | 0.67 (4.62) | 305 | 0.88 (6.02) |
| 5.3 " | 10.8 | 0.61 (4.21) | 248 | 0.95 (6.55) | 7.6 | 0.62 (4.27) | 250 | 0.71 (4.90) |
| Ex. 25 | | | | | | | | |
| 0 Mards | 13.1 | 0.60 (4.14) | 330 | 1.55 (10.69) | 12.2 | 0.60 (4.14) | 365 | 1.37 (9.45) |
| 1.7 " | 8.0 | 0.66 (4.55) | 290 | 1.18 (8.14) | 7.8 | 0.67 (4.62) | 330 | 1.01 (6.96) |
| 3.8 " | 7.5 | 0.65 (4.48) | 300 | 1.23 (8.48) | 7.2 | 0.60 (4.14) | 285 | 0.80 (5.52) |
| 5.3 " | 6.4 | 0.74 (5.10) | 270 | 1.05 (7.24) | 6.0 | 0.78 (5.38) | 198 | 0.79 (5.45) |

TABLE 34

| | Mrad | BE | x | BS | x $10^6$ |
|---|---|---|---|---|---|
| | Mrad | 0 | 1.8 | 3.9 | 5.3 |
| Comp 9 | | 4.52 | 3.06 | 1.59 | 1.30 |
| Ex. 23 | | 4.44 | 3.75 | 3.45 | 2.18 |
| Ex. 24 | | 5.29 | 3.10 | 3.32 | 2.05 |
| Ex. 25 | | 5.06 | 3.38 | 3.00 | 2.20 |

TABLE 35

| | | % Toughness Retained | | | |
|---|---|---|---|---|---|
| | Mrad | 0 | 1.8 | 3.9 | 5.3 |
| Comp 9 | | 100 | 68 | 35 | 28 |
| Ex. 23 | | 100 | 84 | 78 | 49 |
| Ex. 24 | | 100 | 59 | 63 | 39 |
| Ex. 25 | | 100 | 67 | 59 | 44 |

The compositions of Example 23—25 had improved property retention you irradiation. This is particularly shown by the percent toughness retained results in Table 35 and the viscosity retention shown in Table 32.

Examples 26—28

In Examples 26—28 a one mil ($2.5 \times 10^{-2}$ mm) layer of the polyamide compositions containing CAPRON® 8207 Nylon 6 (8207) was coextruded between 1½ mil ($3.8 \times 10^{-2}$ mm) layers of an ethylene vinyl acetate copolymer (EVA) sold by Chemplex as Plexar I and having 5 mol percent vinyl acetate. The polyamide composition was first mixed under the same conditions as in described in Example 1.

The polyamide composition was extruded through a 1 ¾ inch (1.91 cm) diameter (nominal) Reifenhäuser extruder operating at a screw speed of about 43 rpm and a temperature profile of Zone 1—400°F (204°C), Zone 2—470°F (243°C), Zone 3—510°F (266°C), and the adaptor Zone at 490°F (254°C). The extruder motor drive load amperage was about 11 amps.

The Plexar I was extruded through a 2½ inch (6.35 cm) diameter Davis Standard Extruder operating at a screw speed of about 31 rpm and a temperature profile of Zone 1—200°F (93°C), Zone 2—360°F (182°C), Zone 3—445°F (229°C) and Zone 5—475°F (246°C). The motor drive load amperage was about 45 amps.

The extrudate from the extruders was passed to a coextrusion feedblock operating at adaptor zone temperatures of Zone 1—475°F (246°C), Zone 2—484°F (251°C), and Zone 3—489°F (254°C). The laminate from the coextrusion adaptor went to a die having three zones at Zone 1—487°F (253°C), Zone 2—487°F (253°C), and Zone 3—486°F (252°C).

The coextruded film was then cast on a roll at 27°C (80°C), followed by a cooling roll at 27°C (80°F), and another roll at 21°C (70°F).

The film was irradiated in sheet form and tested in accordance with the procedures of Examples 5—7. The compositions of the polyamide layer, tensile properties, and toughness are summarized in Tables 36—39.

TABLE 36

| | Comp 10 | Ex. 26 | Ex. 27 | Ex. 28 |
|---|---|---|---|---|
| Nylon (8209) wt% | 100 | 99.7 | 99.7 | 99.7 |
| Goodrite™ 3125 | - | 0.3 | - | 0.15 |
| Irganox™ 1098 | - | - | 0.3 | 0.15 |
| Viscosity @ | | | | |
| 0 Mrads | 1.89 | 1.91 | 1.92 | 1.91 |
| 1.8 | 1.20 | 1.42 | 1.60 | 1.48 |
| 3.9 | 0.84 | 1.17 | 1.30 | 1.34 |
| 5.3 | 1.01 | 1.01 | 1.11 | 1.12 |

TABLE 37

| | Machine Direction | | | | Transverse Direction | | | |
|---|---|---|---|---|---|---|---|---|
| | % | PSLx$10^4$ (KPax$10^4$) | % | PAlx$10^4$ (KPax$10^4$) | % | PSlx$10^4$ (KPax$10^4$) | % | PSlx$10^4$ (KPax$10^4$) |
| | YE | YS | BE | BS | YE | YS | BE | BS |
| Comp 10 | | | | | | | | |
| 0 Mrads | 14.0 | 0.23 (1.59) | 420 | 0.56 (3.86) | 14.5 | 0.23 (1.59) | 420 | 0.53 (3.65) |
| 1.9 " | 15.6 | 0.21 (1.45) | 440 | 0.49 (3.38) | 15.9 | 0.20 (1.38) | 435 | 0.46 (3.17) |
| 3.9 " | 13.9 | 0.25 (1.72) | 423 | 0.44 (3.03) | 13.2 | 0.26 (1.79) | 407 | 0.43 (2.96) |
| 5.2 " | 13.6 | 0.25 (1.72) | 425 | 0.46 (3.17) | 13.6 | 0.25 (1.72) | 418 | 0.44 (3.03) |
| Ex. 26 | | | | | | | | |
| 0 Mrads | 12.3 | 0.24 (1.65) | 390 | 0.57 (3.93) | 14.8 | 0.23 (1.59) | 420 | 0.56 (3.86) |
| 1.9 " | 16.2 | 0.21 (1.45) | 435 | 0.51 (3.52) | 14.8 | 0.21 (1.45) | 440 | 0.51 (3.52) |
| 3.9 " | 15.0 | 0.26 (1.79) | 428 | 0.55 (3.79) | 13.3 | 0.26 (1.79) | 410 | 0.50 (3.45) |
| 5.2 " | 12.8 | 0.26 (1.79) | 395 | 0.49 (3.38) | 12.6 | 0.26 (1.79) | 395 | 0.47 (3.24) |
| Ex. 27 | | | | | | | | |
| 0 Mrads | 16.1 | 0.23 (1.59) | 410 | 0.56 (3.86) | 14.9 | 0.23 (1.59) | 400 | 0.51 (3.52) |
| 1.9 " | 16.2 | 0.21 (1.65) | 440 | 0.54 (3.72) | 15.9 | 0.21 (1.45) | 460 | 0.54 (3.72) |
| 3.9 " | 15.2 | 0.24 (1.65) | 438 | 0.54 (3.72) | 13.9 | 0.24 (1.65) | 428 | 0.50 (3.45) |
| 5.2 " | 12.8 | 0.25 (1.72) | 400 | 0.51 (3.52) | 12.2 | 0.25 (1.72) | 413 | 0.50 (3.45) |
| Ex. 28 | | | | | | | | |
| 0 Mrads | 16.8 | 0.23 (1.59) | 420 | 0.61 (4.21) | 13.3 | 0.24 (1.65) | 430 | 0.59 (4.07) |
| 1.9 " | 15.4 | 0.24 (1.65) | 450 | 0.57 (3.93) | 14.5 | 0.23 (1.59) | 450 | 0.55 (3.79) |
| 3.9 " | 13.8 | 0.25 (1.72) | 428 | 0.54 (3.72) | 13.3 | 0.26 (1.79) | 433 | 0.52 (3.59) |
| 5.2 " | 12.7 | 0.27 (1.86) | 390 | 0.52 (3.59) | 12.0 | 0.26 (1.79) | 418 | 0.53 (3.65) |

TABLE 38

| | BE x BS x $10^6$ | | | |
|---|---|---|---|---|
| Mrad | 0 | 1.8 | 3.9 | 5.3 |
| Comp 10 | 2.29 | 2.08 | 1.80 | 1.89 |
| Ex. 26 | 2.29 | 2.23 | 2.19 | 1.93 |
| Ex. 27 | 2.17 | 2.43 | 2.24 | 2.04 |
| Ex. 28 | 2.55 | 2.52 | 2.28 | 2.11 |

TABLE 39

| | % Toughness Retained | | | |
|---|---|---|---|---|
| Mrad | 0 | 1.8 | 3.9 | 5.3 |
| Comp 10 | 100 | 91 | 79 | 83 |
| Ex. 26 | 100 | 97 | 96 | 84 |
| Ex. 27 | 100 | 112 | 103 | 94 |
| Ex. 28 | 100 | 99 | 89 | 83 |

The compositions of Examples 26—28 had improved property retention upon irradiation. This was particularly the case up to 3.9 Mrad exposure as shown by the percent toughness retained results in Table 39, and the viscosity retention in Table 36.

Examples 29—31

Examples 26—28 were repeated substituting CAPRON® 8209 Nylon 6 (125 FA) for CAPRON® 8207 Nylon 6 (75 FAV). Compositions and physical tests results are summarized in Tables 40—43.

TABLE 40

| | Comp 11 | Ex. 29 | Ex. 30 | Ex. 31 |
|---|---|---|---|---|
| Nylon (8209) wt% | 100 | 99.7 | 99.7 | 99.7 |
| Goodrite™ 3125 | - | 0.3 | - | 0.15 |
| Irganox™ 1098 | - | - | 0.3 | 0.15 |
| Viscosity @ | | | | |
| | 0 Mrads | 2.31 | 2.39 | 2.402.43 |
| | 1.8 | 1.38 | 1.91 | 1.881.74 |
| | 3.9 | 0.84 | 1.15 | 1.441.26 |
| | 5.3 | 1.01 | 1.26 | 1.211.22 |

TABLE 41

| | Machine Direction | | | | Transverse Direction | | | |
|---|---|---|---|---|---|---|---|---|
| | % | PSIx10$^4$ (KPax10$^4$) | % | PSIx10$^4$ (KPax10$^4$) | % | PSIx10$^4$ (KPax10$^4$) | % | PSIx10$^4$ (KPax10$^4$) |
| | YE | YS | BE | BS | YE | YS | BE | BS |
| Comp 11 | | | | | | | | |
| 0 Mrads | 13.2 | 0.26 (1.79) | 400 | 0.58 (4.00) | 11.8 | 0.26 (1.79) | 400 | 0.51 (3.52) |
| 1.9 " | 15.3 | 0.23 (1.59) | 430 | 0.54 (3.72) | 12.8 | 0.23 (1.59) | 450 | 0.51 (3.52) |
| 3.9 " | 14.2 | 0.26 (1.79) | 390 | 0.45 (3.10) | 13.2 | 0.28 (1.93) | 420 | 0.45 (3.10) |
| 5.2 " | 15.3 | 0.26 (1.79) | 418 | 0.52 (.359) | 13.6 | 0.27 (1.86) | 425 | 0.48 (3.31) |
| Ex. 29 | | | | | | | | |
| 0 Mrads | 21.0 | 0.22 (1.52) | 415 | 0.70 (4.83) | 15.2 | 0.21 (1.45) | 415 | 0.58 (4.00) |
| 1.9 " | 17.0 | 0.23 (1.59) | 420 | 0.53 (3.65) | 13.9 | 0.23 (1.59) | 460 | 0.56 (3.86) |
| 3.9 " | 12.0 | 0.25 (1.72) | 410 | 0.52 (3.59) | 12.4 | 0.24 (1.65) | 424 | 0.49 (3.38) |
| 5.2 " | 13.6 | 0.25 (1.72) | 413 | 0.59 (4.07) | 11.9 | 0.26 (1.79) | 418 | 0.52 (3.59) |
| Ex. 30 | | | | | | | | |
| 0 Mrads | 17.8 | 0.21 (1.45) | 400 | 0.60 (4.14) | 16.2 | 0.21 (1.45) | 420 | 0.57 (3.93) |
| 1.9 " | 16.4 | 0.23 (1.59) | 440 | 0.59 (4.07) | 13.0 | 0.23 (1.59) | 440 | 0.53 (3.65) |
| 4.1 " | 15.1 | 0.24 (1.65) | 425 | 0.56 (3.86) | 13.3 | 0.23 (1.59) | 428 | 0.52 (3.59) |
| 5.5 " | 14.4 | 0.25 (1.72) | 408 | 0.55 (3.79) | 12.2 | 0.25 (1.72) | 410 | 0.50 (3.45) |
| Ex. 31 | | | | | | | | |
| 0 Mrads | 18.9 | 0.22 (1.52) | 390 | 0.60 (4.14) | 15.2 | 0.22 (1.52) | 440 | 0.60 (4.14) |
| 1.7 " | 15.3 | 0.25 (1.72) | 430 | 0.58 (4.00) | 13.2 | 0.25 (1.72) | 440 | 0.55 (3.79) |
| 4.1 " | 15.4 | 0.23 (1.59) | 425 | 0.54 (3.72) | 13.2 | 0.24 (1.65) | 423 | 0.49 (3.38) |
| 5.5 " | 13.6 | 0.25 (1.72) | 400 | 0.52 (3.59) | 11.6 | 0.26 (1.79) | 415 | 0.51 (3.52) |

TABLE 42

| | BE | x | BS | x | $10^6$ |
|---|---|---|---|---|---|
| Mrad | 0 | 1.8 | 3.9 | | 5.3 |
| Comp 11 | 2.18 | 2.31 | 1.86 | | 2.09 |
| Ex. 29 | 2.66 | 2.58 | 2.09 | | 2.24 |
| Ex. 30 | 2.40 | 2.47 | 2.30 | | 2.15 |
| Ex. 31 | 2.49 | 2.46 | 2.16 | | 2.08 |

TABLE 43

| | % Toughness Retained | | | |
|---|---|---|---|---|
| Mrad | 0 | 1.8 | 3.9 | 5.3 |
| Comp 11 | 100 | 106 | 85 | 96 |
| Ex. 29 | 100 | 97 | 79 | 84 |
| Ex. 30 | 100 | 103 | 96 | 90 |
| Ex. 31 | 100 | 99 | 87 | 84 |

The compositions of Examples 29—31 generally retained properties upon irradiation. In particular the viscosity was maintained as indicated in Table 40 and the viscosity retention results shown in Table 40.

Example 32

Example 28 was repeated substituting the polyamide terpolymer described in Example 8 for the CAPRON® 8207 Nylon 6. Compositions and physical test results are summarized in Table 44—47.

TABLE 44

| | Comp 12 | Ex. 32 |
|---|---|---|
| Terpolymer wt. % | 100 | 99.7 |
| Goodrite 3125 | - | 0.15 |
| Irganox 1098 | - | 0.15 |
| Viscosity® | | |
| 0 Mrad | 1.67 | 1.85 |
| 1.8 | | 1.10 |
| 1.63 | | |
| 3.9 | | 0.64 |
| 1.47 | | |
| 5.3 | | 0.79 |
| 1.29 | | |

TABLE 45

| | Machine Direction | | | | Transverse Direction | | | |
|---|---|---|---|---|---|---|---|---|
| | % | PSIx$10^4$ (KPax$10^4$) | % | PSIx$10^4$ (KPax$10^4$) | % | PSIx$10^4$ (KPax$10^4$) | % | PSIx$10^4$ (KPax$10^4$) |
| | YE | YS | BE | BS | YE | BE | YS | BS |
| Comp 12 | | | | | | | | |
| 0 Mrads | 13.6 | 0.22 (1.52) | 440 | 0.53 (3.65) | 12.7 | 0.22 (1.52) | 435 | 0.46 (3.17) |
| 1.7 " | 10.2 | 0.25 (1.72) | 440 | 0.46 (3.17) | 10.1 | 0.25 (1.72) | 440 | 0.42 (2.90) |
| 4.1 " | 10.7 | 0.25 (1.72) | 420 | 0.38 (2.62) | 10.7 | 0.26 (1.79) | 405 | 0.34 (2.34) |
| 5.5 " | 10.5 | 0.24 (1.65) | 405 | 0.38 (2.62) | 10.1 | 0.24 (1.65) | 415 | 0.36 (2.48) |
| Ex. 32 | | | | | | | | |
| 0 Mrads | - | 0.15 (1.03) | 440 | 0.49 (3.38) | 17.7 | 0.17 (1.17) | 410 | 0.43 (2.96) |
| 1.7 " | 10.9 | 0.23 (1.59) | 445 | 0.49 (3.38) | 8.9 | 0.24 (1.65) | 450 | 0.45 (3.10) |
| 4.1 " | 12.4 | 0.22 (1.52) | 438 | 0.46 (3.17) | 11.5 | 0.22 (1.52) | 425 | 0.42 (2.90) |
| 5.5 " | 10.8 | 0.24 (1.65) | 433 | 0.45 (3.10) | 11.1 | 0.24 (1.65) | 430 | 0.41 (2.83) |

TABLE 46

| | BE x BS x $10^6$ | | | |
|---|---|---|---|---|
| Mrad | 0 | 1.8 | 3.9 | 5.3 |
| Comp 12 | 2.17 | 1.94 | 1.47 | 1.55 |
| Ex. 32 | 1.96 | 2.11 | 1.90 | 1.82 |

TABLE 47

| | % Toughness Retained | | | |
|---|---|---|---|---|
| Mrad | 0 | 1.8 | 3.9 | 5.3 |
| Comp 12 | 100 | 89 | 68 | 71 |
| Ex. 32 | 100 | 108 | 97 | 93 |

The compositions of Example 32 generally had improved property retention as indicated in both Tables 44 and 47 for viscosity and percent toughness retention.

**Claims**

1. A method of producing a composition characterized by exposing to ionizing radiation a composition comprising a polyamide and from 0.01 to 10 percent based on the weight of the polyamide of a hindered phenol having the formula:

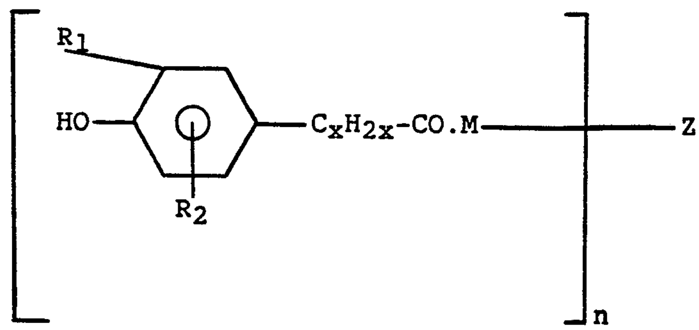

wherein:
n=2 to 6;
x=2 to 6;
$R_1$ is methyl, ethyl, or an alpha-branched alkyl group of from 3 to 10 carbon atoms, each $R_1$ being the same or different;
$R_2$ is hydrogen, methyl, ethyl or an alpha-branched alkyl group of from 3 to 10 carbon atoms, each $R_2$ being the same or different,
M is —NH— or —O—, and
Z is an alkylene or arylene group or an alkylene group interrupted by a cyanurate group or by amine, oxygen, sulphur, or phosphorus.

2. A method according to Claim 1 characterized in that the hindered phenol is:

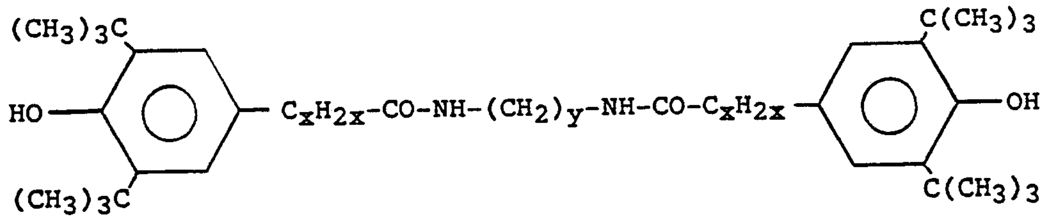

x is 2 to 6 and y is 2 to 10.

3. A method according to Claim 1 characterized in that the hindered phenol is:

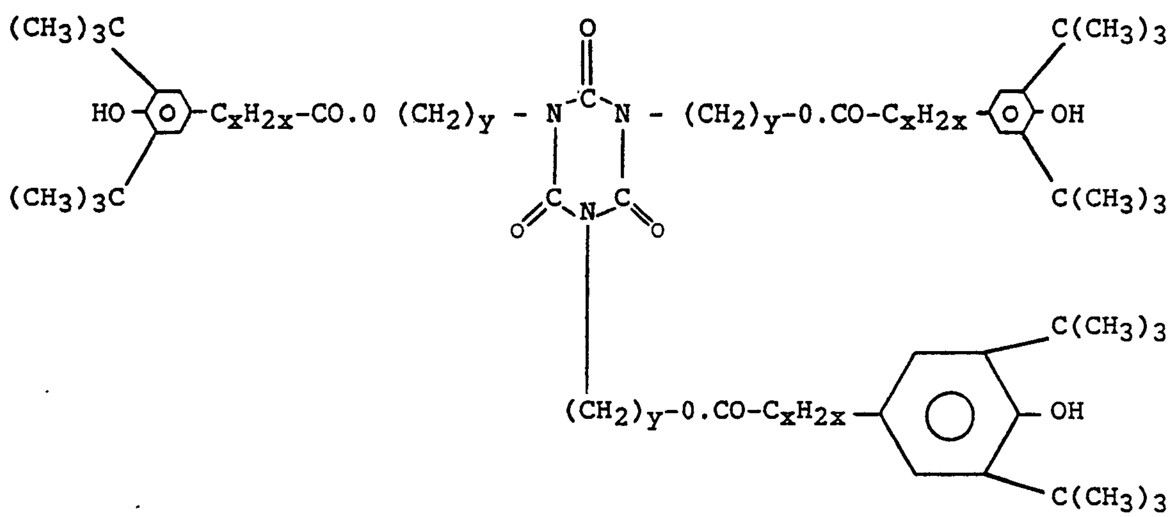

wherein y is 2 to 10.

4. A method according to any one of claims 1 to 3 characterized in that the composition is in the form of a film.

5. A method according to any one of claims 1 to 3 characterized in that composition is in the form of a moulded article.

6. A method according to any one of claims 1 to 5 characterized in that said polyamide is polyepsiloncaprolactam or polyhexamethylene adipamide.

7. A method according to any one of claims 1 to 6 characterized in that said radiation is gamma radiation.

8. An article characterized by having a composition as defined in any of claims 1 to 3 subjected to ionizing radiation.

9. A method of sterilizing an article comprising the steps of:

i) packaging the article in a package having a composition as defined in any of claims 1 to 3,

ii) irradiating the packaged article with ionising radiation.

10. A method as claimed in claim 9 characterized by the step of sealing the article within the package.

11. A multilayer film irradiated with ionising radiation and having at least one layer with a composition as defined in any of claims 1 to 3.

**Patentansprüche**

1. Verfahren Zur Herstellung einer Zusammensetzung, dadurch gekennzeichnet dass die Zusammensetzung einer ionisierenden Bestrahlung ausgesetzt wird, wobei die Zusammensetzung ein Polyamid und von 0.01 bis 10%, bezogen auf das Gewicht des Polyamids, enes sterisch gehinderten Phenols mit der Formel

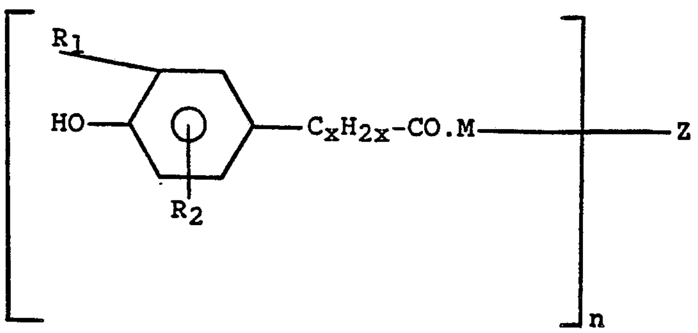

enthält, worin

n=2 bis 6,

x=2 bis 6,

$R_1$ einen Methyl-, Ethyl- oder einen α-verzweigten Alkylrest mit von 3—10 Kohlenstoffatomen, wobei jedes $R_1$ gleich oder verschieden ist,

$R_2$ Wasserstoff, einen Methyl- oder einen α-verzweigten Alkylrest mit von 3—10 Kohlenstoffatomen, wobei jedes $R_2$ gleich oder verschieden ist, und

Z eine Alkylene oder Arylene Gruppe bedeuted welche durch eine Cyanurate Gruppe oder durch Amine, Amide, Sauerstoff, Schwefel oder Phosphor unterbrochen ist.

2. Verfahren nach Anspruch 1, worin das sterisch gehinderte Phenol

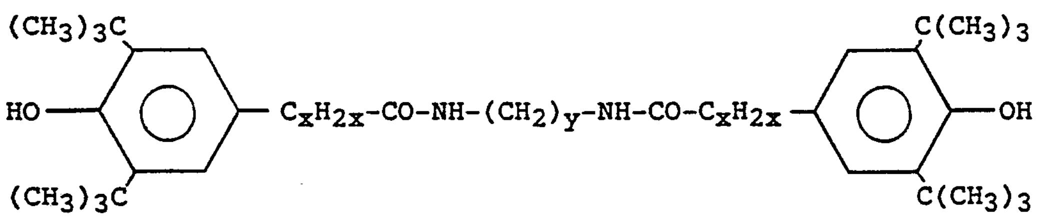

ist,

worin

x eine Zahl von 2 bis 6 und

y eine Zahl von 2 bis 10 bedeuten.

3. Verfahren nach Anspruch 1, worin das sterisch gehinderte Phenol

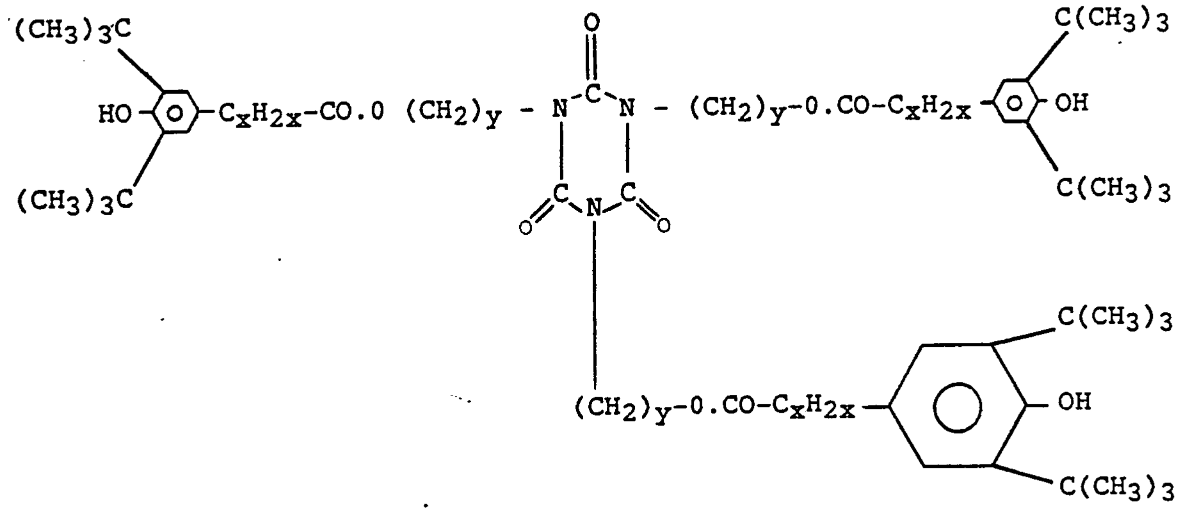

ist,
worin y eine Zahl von 2 bis 10 bedeutet.

4. Verfahren nach irgendeinem der Ansprüche 1—3, dadurch gekennzeichnet, dass die Zusammensetzung in der Form eines Filmes ist.

5. Verfahren nach irgendeinem der Ansprüche 1—3, dadurch gekennzeichnet, dass die Zusammensetzung in der Form eines Formkörpers ist.

6. Verfahren nach irgendeinem der Ansprüche 1—3, worin das Polyamid aus Poly-ε-caprolactam und Polyhexamethylenadipinsäureamid ausgewählt ist.

7. Verfahren nach irgendeinem der Ansprüche 1—6, dadurch gekennzeichnet, dass die Strahlung eine γ-Strahlung ist.

8. Ein Gegenstand gekennzeichnet durch eine Zusammensetzung nach einem der Ansprüche 1—3, welche ionisierender Strahlung unterworfen wurde.

9. Verfahren zum Sterilisieren eines Gegenstandes, enthaltend die Verfahrensstufen Verpacken des Gegenstandes in einer Verpackung aus einer Zusammensetzung entsprechend einem der Ansprüche 1—3, und Bestrahlen des verpackten Gegenstandes mit ionisierenden Strahlen.

10. Verfahren nach Anspruch 9, weiter gekennzeichnet durch die Verfahrensstufe des Versiegelns des Gegenstandes in der Verpackung.

11. Vielschichtiger, mit ionisierenden Strahlen bestrahtter Film mit wenigstens einer Schicht einer Zusammensetzung nach einem der Ansprüche 1—3.

**Revendications**

1. Procédé pour fabriquer une composition, caractérisé par l'exposition à un rayonnement ionisant d'une composition comprenant un polyamide et de 0,01 à 10% par rapport au poids du polyamide d'un phénol stériquement encombré répondant à la formule:

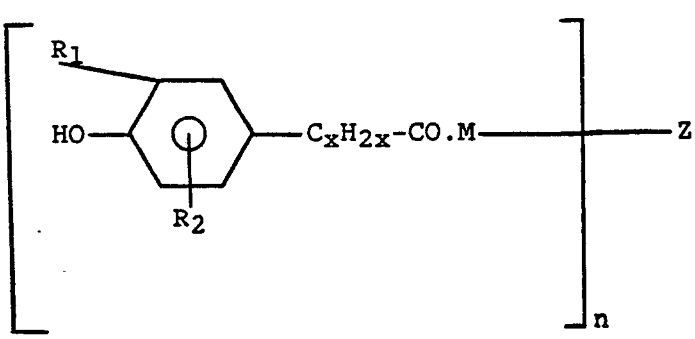

dans laquelle:

n est de 2 à 6

x est de 2 à 6

$R_1$ est un groupe méthyle, éthyle ou un groupe alkyle ramifié en alpha en $C_3$ à $C_{10}$, chaque $R_1$ étant le même ou différent;

$R_2$ est un atome d'hydrogène, un groupe méthyle, éthyle ou un groupe alkyle ramifié en alpha en $C_3$ à $C_{10}$, chaque $R_2$ étant le même ou différent;

M est —NH— ou —O—, et

Z est un groupe alkylène ou arylène ou un groupe alkylène interrompu par un groupe cyanurate ou une amine, un atome d'oxygène, de soufre ou de phosphore.

2. Procédé selon la revendication 1, caractérisé en ce que le phénol stériquement encombré est

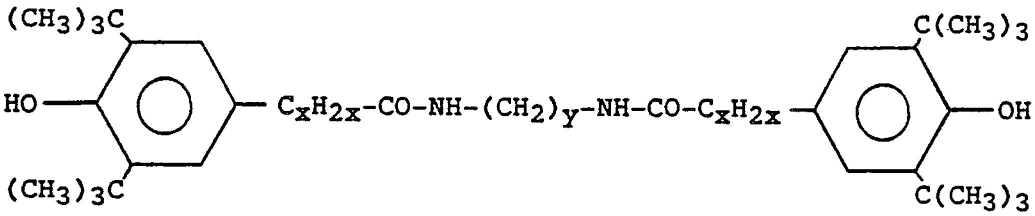

où x est 2 à 6 et y est 2 à 10.

3. Procédé selon la revendication 1, caractérisé en ce que le phénol stériquement encombré est:

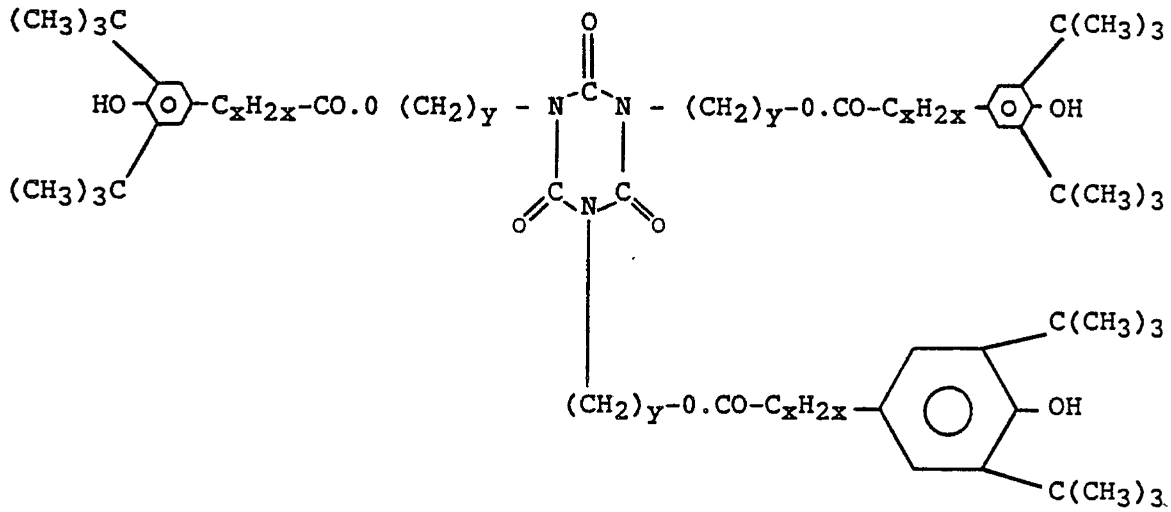

où y est 2 à 10.

4. Procédé selon l'une des revendications 1 à 3, caractérisé en ce que la composition est sous forme d'un film.

5. Procédé selon l'une des revendications 1 à 3, caractérisé en ce que la composition est sous forme d'un article moulé.

6. Procédé selon l'une des revendications 1 à 5, caractérisé en ce que le polyamide est choisi parmi le polyepsiloncaprolactame et le polyhexaméthylène adipamide.

7. Procédé selon l'une des revendications 1 à 6, caractérisé en ce que le rayonnement est un rayonnement gamma.

8. Article, caractérisé en ce qu'il a une composition telle que définie dans l'une des revendications 1 à 3 soumise à un rayonnement ionisant.

9. Procédé de stérilisation d'un article comprenant les stades consistant à:

a) emballer l'article dans un emballange ayant une composition telle que définie dans l'une des revendications 1 à 3.

b) irradier l'article emballé avec un rayonnement ionisant.

10. Procédé selon la revendication 9, caractérisé par le stade consistant à sceller hermétiquement l'article à l'intérieur de l'emballage.

11. Film à couches multiples irradié avec un rayonnement ionisant et ayant au moins une couche avec une composition telle que définie dans l'une des revendications 1 à 3.